# EUROPEAN PATENT APPLICATION

(11) **EP 4 517 252 A1**
(43) Date of publication of application: **05.03.2025**
(21) Application number: 23796159.4
(22) Date of filing: 17.04.2023
(51) Int. Cl.: G01B 7/00, H02K 11/20

(54) **MOTOR BEARING WEAR MONITORING DEVICE, CORRECTION METHOD OF MOTOR BEARING WEAR MONITORING DEVICE, AND CORRECTION PROGRAM**

(30) Priority: 27.04.2022 JP 2022073002
(71) Applicant: Nikkiso Co., Ltd., Tokyo 150-6022 (JP)
(72) Inventor: KOMORI Chihiro, Higashimurayama-shi, Tokyo 189-8520 (JP)
(74) Representative: Mathys & Squire
(86) International application number: PCT/JP2023/015269
(87) International publication number: WO 2023/210416

(57) **Abstract**

The motor bearing wear monitoring device (5, 5A) monitors wear states of bearings (32, 33) with detection coils (C1 to C8). The device includes a storage (56, 56A) storing correspondence information on wear amount of the bearing and a voltage value corresponding to the wear amount, a wear amount detection unit detecting the wear amount of the bearing, based on differences between each of the detection coils (C1, C3) and between each of the detection coils (C5, C7), and a difference between a combined signal of the detection coils (C2, C4) and a combined signal of the detection coils (C6, C8); a signal generation unit (53, 553) generating an amplitude signal, based on the detection signal or the combined signal that are used for generating the difference; and a correction unit (551, 554) correcting the difference or the correspondence information depending on a driving frequency, based on the amplitude signal.

## Description

### [Technical Field]

The present invention relates to a motor bearing wear monitoring device, a correction method for the motor bearing wear monitoring device, and a correction program.

### [Background Art]

A canned motor pump has a structure in which a pump and a motor are integrated and handling liquid does not leak. In general, a rotating structure portion of the canned motor pump (a rotor, a rotating shaft, a bearing, and an impeller) is sealed in a can filled with the handling liquid. Thus, the internal structure of the canned motor pump cannot be visually monitored from the outside. Accordingly, in order to efficiently operate the canned motor pump having such a structure, a device for monitoring a wear state of the bearing (hereinafter referred to as "monitoring device") is used (for example, see PTL 1).

The monitoring device (the motor bearing wear monitoring device) disclosed in PTL 1 monitors displacement of the rotor (the rotating shaft) in the radial direction and the thrust direction caused by bearing wear by using detection coils attached to both ends of the stator in the longitudinal direction and measuring a change in magnetic flux when the rotor rotates. This method includes zero adjustment to adjust an output of the detection coils so that, when the bearing is not worn, the output of the detection coils indicates that the displacement is zero. The monitoring device detects a voltage induced in the detection coils by the rotation of the motor. Thus, the zero adjustment is performed in a state where the motor is rotated by a predetermined operating condition to be used.

The canned motor pump uses a method of reducing a flow rate by throttling back a valve on piping connected to a discharge side of the canned motor pump. The method increases the resistance of liquid flowing through the piping, resulting in energy loss. In recent years, a method has been used in which a driving condition (for example, a driving frequency, a driving voltage, etc.,) of a motor is changed by an inverter (for example, see PTL 2). In this method, since no energy loss occurs unlike the method of throttling the valve, the adjustment of the flow rate by using this method has become mainstream in recent years.

### [Citation List]

### [Patent Literature]

[PTL 1] JP H10-080103 A
[PTL 2] JP2007-162700 A

### [Summary of Invention]

### [Technical Problem]

However, as described above, the monitoring device measures the change in the magnetic flux when the rotor rotates. Thus, when the driving condition is changed by the inverter, the voltage induced in the detection coil varies, and technical issues occur such as erroneous detection due to a deviation in a corresponding relation between a measured value and an amount of wear. As a result, manual adjustment of the corresponding relation (zero adjustment) is required every time the driving condition is changed. **In** this way, the conventional monitoring device requires manual operation in order to maintain the detection accuracy with respect to the change in the driving condition by the inverter.

The present invention is directed to providing a motor bearing wear monitoring device, a correction method for the motor bearing wear monitoring device, and a correction program that are capable of maintaining detection accuracy without manual operation for the device even when a driving condition is changed.

### [Solution to Problem]

A motor bearing wear monitoring device according to one aspect of the present invention is a motor bearing wear monitoring device for monitoring a wear state of bearings that support a rotating shaft of a rotor by detecting a change in magnetic flux corresponding to a mechanical position change of the rotor with respect to a stator of a motor in a canned motor pump by using a plurality of detection coils attached to the stator, in which each of the plurality of detection coils outputs a detection signal indicating the change in the magnetic flux and including a fundamental component based on a driving frequency of the motor, and the plurality of detection coils includes a plurality of radial detection coils that each detects the change in the magnetic flux in a radial direction of the rotating shaft and a plurality of thrust detection coils that each detects the change in the magnetic flux in a thrust direction of the rotating shaft, and the motor bearing wear monitoring device includes: a storage that stores correspondence information between an amount of wear of the bearings and a voltage value corresponding to the amount of wear; a wear amount detection unit that detects the amount of wear of the bearings in the radial direction, based on a first difference between each detection signal output from each of a pair of the radial detection coils among the plurality of radial detection coils, and detects the amount of wear of the bearings in the thrust direction, based on a second difference between a combined signal obtained by combining each detection signal output from each of a pair of the thrust detection coils and a combined signal obtained by combining each detection signal output from each of another pair of the thrust detection coils among the plurality of thrust detection coils; a signal generation unit that generates an amplitude signal indicating an amplitude of the fundamental component, based on the detection signals to be used for generating the first difference or the combined signals to be used for generating the second difference; and a correction unit that corrects, depending on the driving frequency, values of the first difference and the second difference or the correspondence information, based on the amplitude signal.

A correction method for motor bearing wear monitoring device according to one embodiment of the present invention is a correction method for a motor bearing wear monitoring device for monitoring a wear state of bearings that support a rotating shaft of a rotor by detecting a change in magnetic flux corresponding to a mechanical position change of the rotor with respect to a stator of a motor in a canned motor pump by using a plurality of detection coils attached to the stator, in which each of the plurality of detection coils outputs a detection signal indicating the change in the magnetic flux and including a fundamental component based on a driving frequency of the motor, the plurality of detection coils includes a plurality of radial detection coils that each detects the change in the magnetic flux in a radial direction of the rotating shaft and a plurality of thrust detection coils that each detects the change in the magnetic flux in a thrust direction of the rotating shaft, and the motor bearing wear monitoring device includes a storage that stores correspondence information between an amount of wear of the bearings and a voltage value corresponding to the amount of wear, and the correction method for the motor bearing wear monitoring device includes: a wear amount detection step of detecting the amount of wear of the bearings in the radial direction, based on a first difference between each detection signal output from each of a pair of the radial detection coils among the plurality of radial detection coils, and detecting the amount of wear of the bearings in the thrust direction, based on a second difference between a combined signal obtained by combining each detection signal output from each of a pair of the thrust detection coils and a combined signal obtained by combining each detection signal output from each of another pair of the thrust detection coils among the plurality of thrust detection coils; a signal generation step of generating, with the motor bearing wear monitoring device, an amplitude signal indicating an amplitude of the fundamental component, based on the detection signals to be used for generating the first difference or the combined signals to be used for generating the second difference; and a correction step of correcting, with the motor bearing wear monitoring device, values of the first difference and the second difference or the correspondence information depending on the driving frequency, based on the amplitude signal.

A correction program according to one embodiment of the present invention is a correction program to be executed by a processor included in a motor bearing wear monitoring device for monitoring a wear state of bearings that support a rotating shaft of a rotor by detecting a change in magnetic flux corresponding to a mechanical position change of the rotor with respect to a stator of a motor in a canned motor pump by using a plurality of detection coils attached to the stator, in which each of the plurality of detection coils outputs a detection signal indicating the change in the magnetic flux and including a fundamental component based on a driving frequency of the motor, the plurality of detection coils includes a plurality of thrust detection coils that each detects the change in the magnetic flux in a thrust direction of the rotating shaft, and the motor bearing wear monitoring device includes a storage that stores correspondence information between an amount of wear of the bearings and a voltage value corresponding to the amount of wear, the correction program causing the processor to function as: a wear amount detection unit that detects the amount of wear of the bearings in the thrust direction, based on a difference between a combined signal obtained by combining each detection signal output from each of a pair of the thrust detection coils and a combined signal obtained by combining each detection signal output from each of another pair of the thrust detection coils among the plurality of thrust detection coils; a signal generation unit that generates an amplitude signal indicating an amplitude of the fundamental component, based on the combined signals to be used for generating the difference; and a correction unit that corrects, depending on the driving frequency, a value of the difference or the correspondence information, based on the amplitude signal.

### [Advantageous Effects of Invention]

The present invention is able to provide the motor bearing wear monitoring device, the correction method for the motor bearing wear monitoring device, and the correction program that are capable of maintaining detection accuracy without manual operation for the device even when a driving condition is changed.

### [Brief Description of Drawings]

[Fig. 1] Fig. 1 is a side view of a canned motor pump.
[Fig. 2] Fig. 2 is a schematic sectional view of a motor unit illustrating a longitudinal
section of the motor unit included in the canned motor pump in Fig. 1.
[Fig. 3] Fig. 3 schematically illustrates an enlarged sectional view of a part A of the motor unit in Fig. 2.
[Fig. 4] Fig. 4 is a functional block diagram illustrating an embodiment of the motor bearing wear monitoring device according to the present invention.
[Fig. 5] Fig. 5 is a schematic perspective view illustrating arrangement of detection coils included in the motor bearing wear monitoring device in Fig. 4.
[Fig. 6] Fig. 6 is an enlarged perspective view of a part B in Fig. 5.
[Fig. 7] Fig. 7 is a schematic diagram illustrating an example of a detection signal of the detection coil in Fig. 5.
[Fig. 8] Fig. 8 is a schematic diagram illustrating a relation between a position of a rotor in a thrust direction with respect to a stator included in the motor unit in Fig. 2 and a combined signal obtained by combining two detection signals.
[Fig. 9] Fig. 9 is a schematic diagram illustrating an example of information stored in a storage included in the motor bearing wear monitoring device in Fig. 4.
[Fig. 10] Fig. 10 is a schematic diagram illustrating an appearance of a display included in the motor bearing wear monitoring device in Fig. 4.
[Fig. 11] Fig. 11 is a schematic diagram illustrating a display mode of the display in the thrust direction in Fig. 10.
[Fig. 12] Fig. 12 is a flowchart illustrating an example of an operation of the motor bearing wear monitoring device in Fig. 4.
[Fig. 13] Fig. 13 is a flowchart illustrating an example of correction processing included in the operation in Fig. 12.
[Fig. 14] Fig. 14 is a schematic diagram illustrating an example of correction to be executed in the correction processing in Fig. 13.
[Fig. 15] Fig. 15 is a flowchart illustrating an example of wear amount detection processing included in the operation in Fig. 12.
[Fig. 16] Fig. 16 is a functional block diagram illustrating another embodiment of the motor bearing wear monitoring device according to the present invention.
[Fig. 17] Fig. 17 is a flowchart illustrating an example of correction information acquisition processing to be executed by the motor bearing wear monitoring device in Fig. 16.
[Fig. 18] Fig. 18 is a schematic diagram illustrating weighting by a signal generation unit included in the motor bearing wear monitoring device in Fig. 16, and Fig. 18A illustrates a state before the weighting and Fig. 18B illustrates a state after the weighting.
[Fig. 19] Fig. 19 is a flowchart illustrating an example of wear amount detection processing to be executed by the motor bearing wear monitoring device in Fig. 16.
[Fig. 20] Fig. 20 is a schematic diagram illustrating an example of correction to be executed in the wear amount detection processing in Fig. 19.

### [Description of Embodiments]

The present invention enables a motor bearing wear monitoring device for a canned motor pump to include a function of automatically acquiring amplitude (signal level, potential) of a detection signal, a function of automatically generating correction information corresponding to the amplitude, and a function of automatically correcting, depending on a driving condition, a detected amount of wear and the like, based on the correction information, thereby maintaining detection accuracy without manual operation for the device even when the driving condition is changed, and allowing an inverter to control flow rate in the motor bearing wear monitoring device. Detail of each term will be described later.

Embodiments of a motor bearing wear monitoring device according to the present invention (hereinafter referred to as "present device"), a correction method for the motor bearing wear monitoring device (hereinafter referred to as "present method"), and a correction program (hereinafter referred to as "present program") will be described below with reference to the drawings. In the drawings, the same members and components are indicated with the same reference signs, and repetitive description thereof will be omitted.

### Canned Motor Pump

### Configuration of Canned Motor Pump

First, the configuration of a canned motor pump will be described.

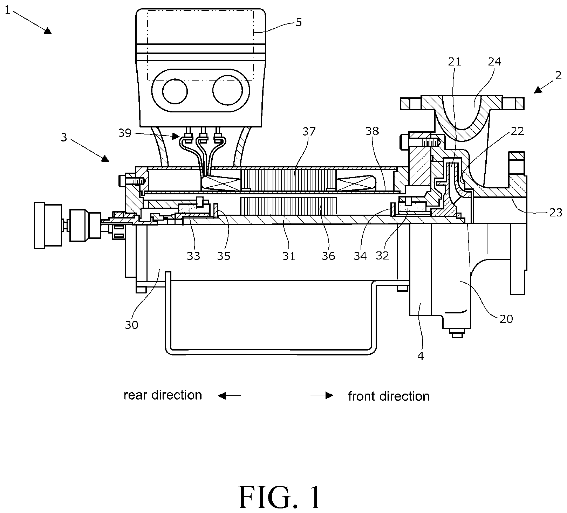

Fig. 1 is a side view of the canned motor pump. The figure illustrates an upper half portion of the canned motor pump 1 in section for convenience of description.

The canned motor pump 1 is a pump having a structure in which handling liquid does not leak and used in particular for feeding high-temperature liquid or highly dangerous liquid (e.g., a liquid that is explosive, flammable, or toxic). The pump 1 includes a pump unit 2, a motor unit 3, an adapter 4, and the present device 5.

In the configurations of the canned motor pump 1, the configurations of the pump unit 2, the motor unit 3, and the adapter 4 are common to the configurations of a known canned motor pump. Thus, in the following description, the configurations of the pump unit 2, the motor unit 3, and the adapter 4 will be briefly described, and the detailed description thereof will be omitted.

In the following description, the "front direction" is a direction (forward) in which the pump unit 2 is positioned with respect to the motor unit 3, and the "rear direction" is a direction (backward) in which the motor unit 3 is positioned with respect to the pump unit 2.

The pump unit 2 sucks and discharges the handling liquid. The pump unit 2 includes a housing 20, an impeller 21, a pump chamber 22, a suction pipe portion 23, and a discharge pipe portion 24. The housing 20 includes the pump chamber 22 that accommodates the impeller 21, the suction pipe portion 23 that is a path for the handling liquid to be sucked into the pump chamber 22, and the discharge pipe portion 24 that is a path for the handling liquid to be discharged from the pump chamber 22. The pump chamber 22 communicates with the suction pipe portion 23 and the discharge pipe portion 24.

The motor unit 3 is driven under a predetermined driving condition (e.g., driving voltage is 200 V and driving frequency is 60 Hz) and rotates the impeller 21 of the pump unit 2. The motor unit 3 includes a housing 30, a rotating shaft 31, two bearings 32 and 33, two thrust washers 34 and 35, a rotor 36, a stator 37, a can 38, and a terminal 39. The motor unit 3 is an example of the motor in the present invention.

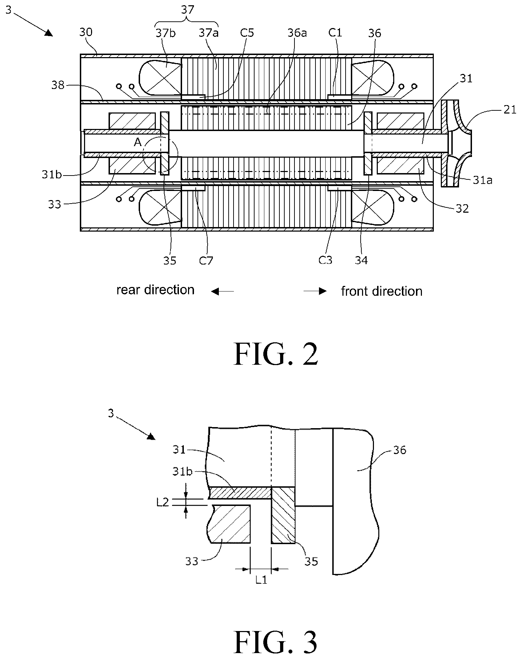

Fig. 2 is a schematic sectional view of the motor unit 3 illustrating a longitudinal section of the motor unit 3. Fig. 3 schematically illustrates an enlarged sectional view of a part A of the motor unit 3 in Fig. 2.

The housing 30 liquid-tightly accommodates the stator 37 and the can 38.

The rotating shaft 31 rotates by the rotation of the rotor 36 and transmits rotating power to the impeller 21. The rotating shaft 31 has a solid cylindrical shape. The rotating shaft 31 is disposed through the rotor 36 and is fixed. A front end portion of the rotating shaft 31 projects into the pump chamber 22 (see Fig. 1), and the impeller 21 is attached to the front end portion. The rotating shaft 31 includes hollow cylindrical-shaped sleeves 31a and 31b that protect a front portion and a rear portion of the rotating shaft 31.

In the following description, the "thrust direction" is an axial direction of the rotating shaft 31, the "radial direction" is a radial direction of the rotating shaft 31, and the "circumferential direction" is a circumferential direction of the rotating shaft 31.

The bearing 32 is disposed at the front direction of the rotor 36 and rotatably supports the rotating shaft 31. The bearing 33 is disposed at the rear direction of the rotor 36 and rotatably supports the rotating shaft 31. The bearings 32 and 33 are rolling bearings, for example. The thrust washer 34 is attached between the bearing 32 and the rotor 36 on the rotating shaft 31 and restricts the movement of the rotating shaft 31 in the front direction. The thrust washer 35 is attached between the bearing 33 and the rotor 36 on the rotating shaft 31 and restricts the movement of the rotating shaft 31 in the rear direction.

A gap of the length L1 is each defined between the bearing 32 and the thrust washer 34 and between the bearing 33 and the thrust washer 35. A gap of the length L2 is each defined between the bearing 32 and the sleeve 31a and between the bearing 33 and the sleeve 31b.

The rotor 36 rotates due to a rotating magnetic field generated in the stator 37. The rotor 36 has a hollow cylindrical shape. The rotor 36 includes a plurality of rod-shaped rotor bars 36a, the number thereof being 28 in the present embodiment, that are embedded at equal intervals in an outer peripheral edge portion of the rotor 36 in the circumferential direction. When the bearings 32 and 33 are not worn, the rotor 36 is disposed at an initial position with respect to the stator 37. In the present embodiment, the "initial position" is a position where the center of the stator 37 and the center of the rotor 36 coincide with each other in the thrust direction and the radial direction.

The stator 37 generates the rotating magnetic field that rotates the rotor 36. The stator 37 has a substantially hollow cylindrical shape. The stator 37 includes a stator core 37a and a plurality of motor windings 37b.

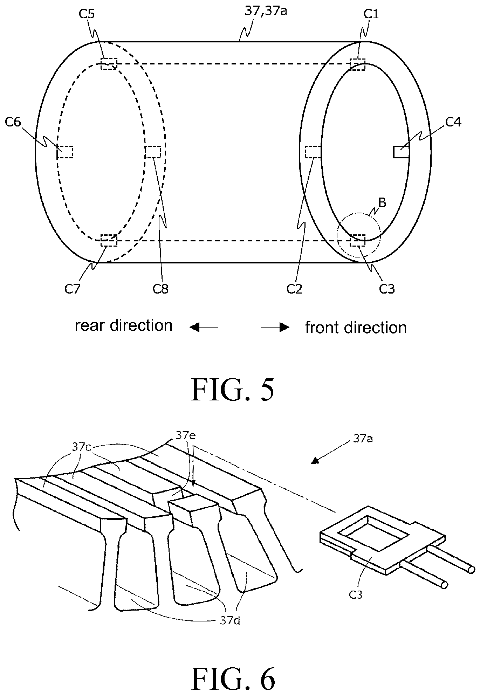

The stator core 37a holds the motor winding 37b. The stator core 37a has a hollow cylindrical shape. The stator core 37a includes a plurality of tooth portions 37c (see Fig. 6, the same applies hereinafter).

The tooth portions 37c define slots 37d (see Fig. 6, the same applies hereinafter) through which the motor windings 37b are disposed. In the circumferential direction, the tooth portions 37c are disposed at equal intervals on an inner peripheral surface of the stator core 37a. The motor windings 37b are disposed through the slots 37d and are connected to a power supply device (not illustrated) such as an inverter, for example, via the terminal 39.

The can 38 liquid-tightly accommodates the rotating shaft 31, the bearings 32 and 33, the thrust washers 34 and 35, and the rotor 36. The can 38 has a hollow cylindrical shape. Some handling liquid introduced from the suction pipe portion 23 is introduced into the can 38, used for cooling the bearings 32 and 33 and the motor unit 3, and discharged to the discharge pipe portion 24.

Referring now back to Fig. 1, the adapter 4 is connected to an end portion of the pump unit 2 on the rear side and an end portion of the motor unit 3 on the front side, and the adapter 4 interconnects the pump unit 2 and the motor unit 3.

The present device 5 detects a change in magnetic flux corresponding to a mechanical position change of the rotor 36 with respect to the stator 37, thereby monitoring a wear state of the bearings 32 and 33 supporting the rotating shaft 31. A specific configuration of the present device 5 will be described later.

### Motor Bearing Wear Monitoring Device (1)

### Configuration of Motor Bearing Wear Monitoring Device (1)

Next, the configuration of the present device 5 will be described. In the following description, Figs. 1 to 3 will be referred to as appropriate.

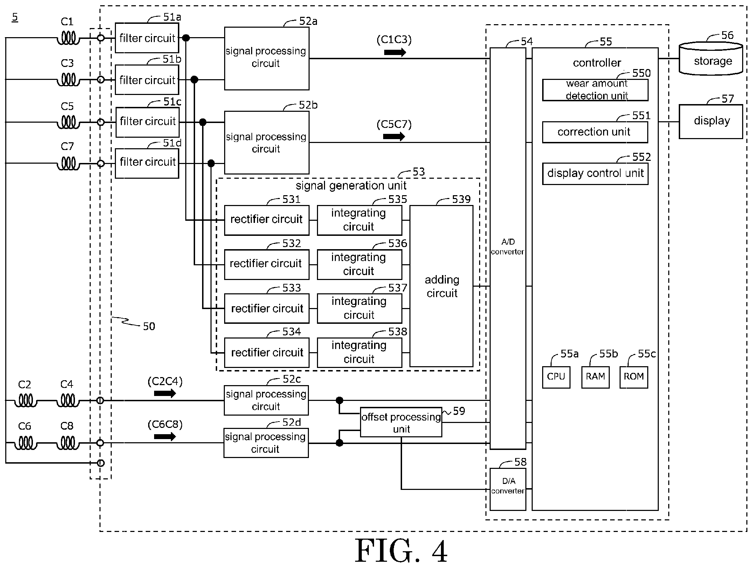

Fig. 4 is a functional block diagram illustrating an embodiment of the present device 5.

The present device 5 includes eight detection coils C1, C2, C3, C4, C5, C6, C7, and C8, a connection 50, filter circuits 51a, 51b, 51c, and 51d, signal processing circuits 52a, 52b, 52c, and 52d, a signal generation unit 53, an A/D converter 54, a controller 55, a storage 56, a display 57, a D/A converter 58, and an offset processing unit 59. The A/D converter 54, the controller 55, and the D/A converter 58 are implemented by a microcomputer, for example.

Fig. 5 is a schematic perspective view illustrating the arrangement of the detection coils C1 to C8. Fig. 6 is an enlarged perspective view of a part B in Fig. 5.

The detection coils C1 to C8 detect a change in magnetic flux corresponding to a position change (displacement) of the rotor 36 with respect to the stator 37 and generate and output detection signals indicating the change in the magnetic flux. The rotor 36 is displaced in the radial direction together with the rotating shaft 31 depending on an amount of wear of the bearings 32 and 33 in the radial direction, and the rotor 36 is displaced in the thrust direction together with the rotating shaft 31 depending on an amount of wear of the bearings 32 and 33 in the thrust direction. That is, the amount of displacement of the rotor 36 can be regarded as the amount of wear of the bearings 32 and 33. Thus, the present device 5 is able to detect the amount of wear of the bearings 32 and 33 by detecting the amount of displacement of the rotor 36 by using the detection coils C1 to C8. The detection coils C1 to C8 have a flat bobbin shape. The detection coils C1 to C8 are fitted into notches 37e formed in tooth portions 37c at end portions on the front side and the rear side of the stator 37.

In the circumferential direction, the detection coils C1 to C4 are attached at equal intervals (at intervals of 90 degrees) to a front end portion of the tooth portions 37c of the stator 37. The detection coil C1 is disposed at a position of 180 degrees with respect to the detection coil C3 so as to face the detection coil C3, and the detection coil C2 is disposed at a position of 180 degrees with respect to the detection coil C4 so as to face the detection coil C4. In contrast, in the circumferential direction, the detection coils C5 to C8 are attached at equal intervals (at intervals of 90 degrees) to a rear end portion of the tooth portions 37c of the stator 37. The detection coil C5 is disposed at a position of 180 degrees with respect to the detection coil C7 so as to face the detection coil C7, and the detection coil C6 is disposed at a position of 180 degrees with respect to the detection coil C8 so as to face the detection coil C8.

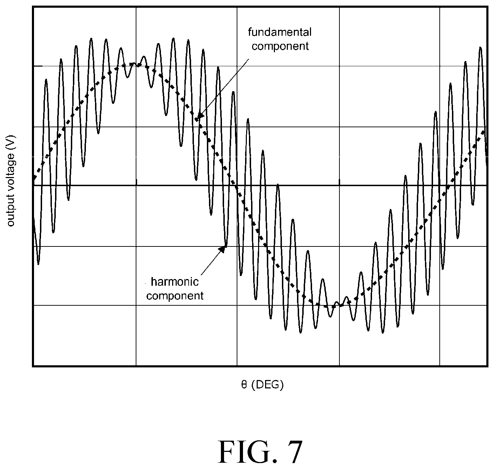

Fig. 7 is a schematic diagram illustrating an example of the detection signal.

In the figure, the horizontal axis indicates a rotation angle of the rotor 36, and the vertical axis indicates an output voltage (a signal level) of induced electromotive force of the detection coils C1 to C8. The detection signals of the detection coils C1 to C8 include a waveform corresponding to a change in main magnetic flux of the motor unit 3 (hereinafter referred to as "fundamental component") and a waveform corresponding to a change in magnetic flux generated by an induced current flowing through the rotor bars 36a of the rotor 36 (hereinafter referred to as "harmonic component"). The fundamental component is generated by a driving voltage of the motor unit 3, and the frequency thereof is the same as a driving frequency of the driving voltage. The harmonic component is generated by the induced current flowing through the rotor bars 36a, and the frequency thereof is determined by the rotation of the rotor 36 and the number of the rotor bars 36a. That is, for example, under the following condition: the driving frequency is 60 Hz, and the number of rotor bars 36a is 28, each of the detection coils C1 to C8 detects 28 times a change in the magnetic flux due to the rotor bar 36a while the rotor 36 rotates once. Thus, the frequency of the harmonic component is 60 Hz×28=1.68 kHz. In this way, the fundamental component is determined based on the driving frequency, and the harmonic component is determined based on the rotation of the rotor 36, the driving frequency, and the number of the rotor bars 36a.

Herein, the rotation speed of the motor unit 3 can be easily changed by varying the driving frequency using inverter control. In this case, since lowering only the driving frequency without lowering the driving voltage causes the motor unit 3 to burn out, the driving frequency and the driving voltage are generally changed at the same time. The increase and decrease in the driving frequency and the increase and decrease in the driving voltage are proportional to each other. That is, the driving voltage decreases in proportion to the decrease in the driving frequency and increases in proportion to the increase in the driving frequency. As described above, since the fundamental component of the detection signal is generated by the driving voltage, the signal level (the amplitude) of the fundamental component is proportional to the driving frequency and the driving voltage. Accordingly, the signal level (the amplitude) of the fundamental component increases and decreases in proportion to an increase and decrease in the driving condition (driving frequency, driving voltage).

Referring now back to Figs. 4 and 5, the detection coils C1, C3, C5, and C7 detect the amount of displacement of the rotor 36 in the radial direction, i.e., the amount of wear of the bearings 32 and 33 in the radial direction, by detecting the change in the magnetic flux corresponding to the displacement of the rotor 36 in the radial direction due to an increase in the gap (L2) between the bearing 32 and the sleeve 31a and between the bearing 33 and the sleeve 31b. The detection coils C1 and C3 constitute a pair of radial detection coils, and the detection coils C5 and C7 constitute another pair of radial detection coils.

When the front side of the rotor 36 is displaced from the initial position in the radial direction, the signal level of the harmonic component increases on the side where the rotor 36 approaches (e.g., at the detection coil C1) and decreases on the side from which the rotor 36 moves farther away (e.g., at the detection coil C3) among the pair of detection coils C1 and C3. In this case, since the relative movement distance of the rotor 36 with respect to the detection coils C1 and C3 is the same, the increase amount of the signal level is the same as the decrease amount. In contrast, the signal level of the fundamental component does not increase or decrease. Thus, when each detection signal of the detection coils C1 and C3 is combined so as to take (generate) the difference, in the combined signal (hereinafter referred to as "combined signal C1C3"), the difference in the signal level of the harmonic component increases depending on the increase in the displacement amount. Due to this difference, the amount of displacement of the rotor 36 in the radial direction on the front side is detectable. That is, the difference indicates the amount of wear of the bearing 32 in the radial direction, and the value of the difference is represented by a voltage value. Similarly, in a combined signal of each detection signal of the detection coils C5 and C7 (hereinafter referred to as "combined signal C5C7"), a difference in the signal level of the harmonic component increases depending on an increase in the displacement amount. Due to this difference, the amount of displacement of the rotor 36 in the radial direction on the rear side is detectable. That is, the difference indicates the amount of wear of the bearing 33 in the radial direction, and the value of the difference is represented by a voltage value. Accordingly, for example, when there is no displacement of the rotor 36 in the radial direction, the fundamental component and the harmonic component cancel each other out in each combined signal (C1C3, C5C7), and the voltage value thereof is approximately "0". In contrast, when there is displacement of the rotor 36 in the radial direction, the difference between the harmonic components increases depending on the amount of displacement in each combined signal (C1C3, C5C7), and the voltage value increases depending on the difference. Since the detection coils C1 and C3 are independent of the detection coils C5 and C7, the uneven wear of the bearings 32 and 33 (i.e., a state where one bearing is more worn than the other bearing) is detectable by comparing the value of the combined signal C1C3 with the value of the combined signal C5C7. The difference between each detection signal of the detection coils C1 and C3 and the difference between each detection signal of the detection coils C5 and C7 are examples of a first difference in the present invention.

The detection coils C2, C4, C6, and C8 detect the amount of displacement of the rotor 36 in the thrust direction, i.e., the amount of wear of the bearings 32 and 33 in the thrust direction, by detecting the change in the magnetic flux corresponding to the displacement of the rotor 36 in the thrust direction due to an increase in the gap (L1) between the bearing 32 and the thrust washer 34 and between the bearing 33 and the thrust washer 35. The detection coils C2 and C4 constitute a pair of thrust detection coils and are connected so that detection signals thereof are superimposed on each other. Thus, the detection signals from the detection coils C2 and C4 are combined so as to be superimposed, and a combined signal C2C4 is generated. The detection coils C6 and C8 constitute another pair of thrust detection coils and are connected so that the detection signals thereof are superimposed on each other. Thus, the detection signals from the detection coils C6 and C8 are combined so as to be superimposed, and a combined signal C6C8 is generated.

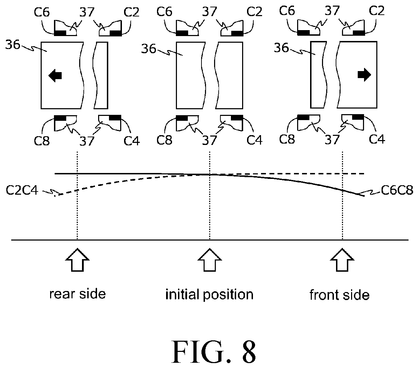

Fig. 8 is a schematic diagram illustrating a relation between a position of the rotor 36 with respect to the stator 37 in the thrust direction and each combined signal (C2C4, C6C8). **In** the figure, the vertical axis indicates an output voltage (a signal level), and the horizontal axis indicates the position of the rotor 36 in the thrust direction.

When the rotor 36 is displaced from the initial position to the rear side, an overlap between the detection coils C2 and C4 and the rotor 36 decreases in the radial direction, but an overlap between the detection coils C6 and C8 and the rotor 36 does not change. As a result, the signal level of the fundamental component of the combined signal C2C4 decreases, but the signal level of the fundamental component of the combined signal C6C8 hardly changes. Similarly, when the rotor 36 is displaced from the initial position to the front side, the signal level of the fundamental component of the combined signal C6C8 decreases, but the signal level of the fundamental component of the combined signal C2C4 hardly changes. Thus, the amount of displacement of the rotor 36 in the thrust direction is detectable by combining the combined signal C2C4 and the combined signal C6C8 to obtain a difference therebetween. That is, the difference indicates the amount of displacement of the rotor 36 in the thrust direction, i.e., the amount of wear of the bearings 32 and 33 in the thrust direction, and the value of the difference is represented by a voltage value. Accordingly, for example, when there is no displacement of the rotor 36 in the thrust direction, the fundamental component and the harmonic component cancel each other out in the difference, and the voltage value thereof is approximately "0". In contrast, when there is displacement of the rotor 36 in the thrust direction, the difference of the fundamental component increases depending on the amount of the displacement, and the voltage value increases depending on the increase in the difference. Herein, when the signal level decreases, the detection coils C2, C4, C6, and C8 are influenced by the magnetic flux-density distribution from the end portions of the rotor 36, and thus the signal level does not change linearly with respect to the displacement of the rotor 36 but changes in a slightly upwardly convex curve shape with respect to the position of the rotor 36. The difference between the combined signal C2C4 and the combined signal C6C8 is an example of a second difference in the present invention.

Referring now back to Fig. 4, the connection 50 is an interface to which the detection coils C1 to C8 are connected.

The filter circuits 51a, 51b, 51c, and 51d execute predetermined filtering processing for the detection signals of the corresponding detection coils C1, C3, C5, and C7, respectively. The filter circuits 51a to 51d are band-pass filters having a pass band (e.g., 30 Hz to 2 kHz) that allows the fundamental component and the harmonic component to pass through, for example. The filter circuit 51a is connected to the detection coil C1, the signal processing circuit 52a, and a rectifier circuit 531 described later. The filter circuit 51b is connected to the detection coil C3, the signal processing circuit 52a, and a rectifier circuit 532 described later. The filter circuit 51c is connected to the detection coil C5, the signal processing circuit 52b, and a rectifier circuit 533 described later. The filter circuit 51d is connected to the detection coil C7, the signal processing circuit 52b, and a rectifier circuit 534 described later.

The signal processing circuits 52a and 52b include a difference amplifier circuit, a rectifier circuit, and an integrating circuit, for example. The signal processing circuit 52a generates the combined signal C1C3 indicating a difference between each detection signal of the pair of detection coils C1 and C3, executes predetermined signal processing (rectifying, AC-DC conversion) for the combined signal C1C3, and converts the combined signal C1C3 from alternating current to direct current. The signal processing circuit 52b generates the combined signal C5C7 indicating a difference between each detection signal of the pair of detection coils C5 and C7, executes predetermined signal processing (rectifying, AC-DC conversion) for the combined signal C5C7, and converts the combined signal C5C7 from alternating current to direct current.

The signal processing circuits 52c and 52d include a filter circuit, a rectifier circuit, and an integrating circuit, for example. The filter circuit is a low-pass filter having a cutoff frequency (e.g., 120 Hz) that allows the fundamental component to pass through. The signal processing circuit 52c is connected to the detection coils C2 and C4, and the signal processing circuit 52d is connected to the detection coils C6 and C8. The signal processing circuits 52c and 52d execute predetermined signal processing (filtering processing, rectifying, and AC-DC conversion) for the corresponding combined signals C2C4 and C6C8, respectively, and convert the combined signals C2C4 and C6C8 from alternating current to direct current.

The signal generation unit 53 generates a signal indicating the amplitude of the fundamental component (hereinafter referred to as "amplitude signal"), based on the detection signal of each of the detection coils C1, C3, C5, and C7. The signal generation unit 53 includes the rectifier circuits 531, 532, 533, and 534, integrating circuits 535, 536, 537, and 538, and an adding circuit 539. Herein, the integrating circuits 535 to 538 are smoothing circuits that execute averaging processing for the detection signals rectified by the corresponding rectifier circuits 531 to 534 and average the detection signals to direct current.

The rectifier circuit 531 and the integrating circuit 535 convert the detection signal of the detection coil C1 from alternating current to direct current. The rectifier circuit 532 and the integrating circuit 536 convert the detection signal of the detection coil C3 from alternating current to direct current. The rectifier circuit 533 and the integrating circuit 537 convert the detection signal of the detection coil C5 from alternating current to direct current. The rectifier circuit 534 and the integrating circuit 538 convert the detection signal of the detection coil C7 from alternating current to direct current. In this case, each detection signal is averaged and is a signal indicating the signal level (the amplitude) of the fundamental component. The adding circuit 539 adds up the DC signals of the integrating circuits 535 to 538 and generates the amplitude signal.

As described above, the amount of increase (the amount of decrease) in the signal level of the harmonic component of the detection signal of the detection coil C1 is the same as the amount of decrease (the amount of increase) in the signal level of the harmonic component of the detection signal of the detection coil C3. Similarly, the amount of increase (the amount of decrease) in the signal level of the harmonic component of the detection signal of the detection coil C5 is the same as the amount of decrease (the amount of increase) in the signal level of the harmonic component of the detection signal of the detection coil C7. Thus, when the DC signals of these detection signals are added up and the amplitude signal is generated, the increase and decrease in the signal level of the harmonic component indicating the displacement of the rotor 36 in the radial direction is canceled out in the amplitude signal. That is, the amplitude signal functions as information indicating the amplitude of the fundamental component that does not include the displacement information of the rotor 36 in the radial direction. In the present embodiment, the amplitude signal is the sum of the four detection signals, and the signal level thereof is about 4 times the signal level of the detection signal. That is, the signal level (the amplitude) of the amplitude signal is proportional to the signal level (the amplitude) of the fundamental component. As described above, the signal level of the fundamental component fluctuates in proportion to the fluctuation of the driving condition. Thus, the present device 5 is able to indirectly detect the fluctuation of the driving condition, based on the fluctuation of the signal level of the amplitude signal by acquiring the amplitude signal.

The A/D converter 54 is connected to the signal processing circuits 52a to 52d, the signal generation unit 53, and the offset processing unit 59, converts an analog signal input from each of the circuits and the units into a digital signal, and outputs the digital signal to the controller 55.

The controller 55 controls the operation of the whole present device 5. The controller 55 includes, for example, a processor such as a central processing unit (CPU) 55a, a volatile memory such as a random access memory (RAM) 55b that functions as a working area for the CPU 55a, and a non-volatile memory such as a read only memory (ROM) 55c that stores various kinds of information such as the present program and other control programs. The controller 55 includes a wear amount detection unit 550, a correction unit 551, and a display control unit 552. The RAM 55b functions as a storage in the present invention.

In the controller 55, the present program operates, and the present program cooperates with the hardware resources of the present device 5 and achieves each method described later. By causing the processor (the CPU 55a) included in the controller 55 to execute the present program, the present program enables the processor to function as the wear amount detection unit 550, the correction unit 551, and the display control unit 552 and enables the processor to execute the present method. The present program may be stored in an installable file format or a non-transitory storage medium, e.g., a compact disk (CD), a digital versatile disc (DVD), a universal serial bus (USB) memory, etc., in an executable file format and provided to the present device 5 via a dedicated reading medium.

The wear amount detection unit 550 detects the amount of displacement of the rotor 36 in the radial direction at the front and rear sides, based on the difference of each detection signal output from the pair of detection signals C1 and C3 and the another pair of C5 and C7, i.e., based on each combined signal C1C3 and C5C7, thereby detecting the amount of wear of the bearings 32 and 33 in the radial direction. The wear amount detection unit 550 detects the amount of displacement of the rotor 36 in the thrust direction, based on the difference between the combined signal C2C4 and the combined signal C6C8, thereby detecting the amount of wear of the bearings 32 and 33 in the thrust direction. A specific operation of the wear amount detection unit 550 will be described later.

The correction unit 551 corrects, depending on the driving condition, the correspondence information described later, based on the amplitude signal from the signal generation unit 53. A specific operation of the correction unit 551 will be described later.

The display control unit 552 controls display of the amount of wear in the display 57, based on display information described later and the amount of wear detected by the wear amount detection unit 550.

The storage 56 stores information necessary for the operation of the present device 5 such as reference adjustment data, etc.,. The storage 56 is a non-volatile memory such as an electrically erasable programmable read-only memory (EEPROM) or a flash memory, for example.

The "reference adjustment data" is information composed of a group of parameters serving as a reference for the present device 5 to accurately detect the amount of displacement of the rotor 36, i.e., the amount of wear of the bearings 32 and 33, based on the detection signals of the detection coils C1 to C8. The reference adjustment data includes pieces of information such as reference amplitude information, reference correspondence information in the thrust direction, offset information, reference correspondence information in the radial direction, display information, for example. The reference adjustment data is measured or set in advance prior to shipment of the canned motor pump 1 under predetermined reference driving condition (e.g., the driving frequency is 60Hz, the driving voltage is 200V) and is stored in the storage 56.

The "reference amplitude information" is information indicating a reference signal level (reference amplitude) of the fundamental component obtained based on the reference amplitude signal to be generated by the signal generation unit 53 when the canned motor pump 1 is operated under the reference driving condition, and a value thereof is represented by a voltage value.

The "reference correspondence information in the thrust direction" is information indicating a correspondence between a position (an amount of displacement) of the rotor 36 in the thrust direction with respect to the stator 37 and a difference value between the combined signal C2C4 and the combined signal C6C8 under the reference driving condition. The "position of the rotor 36 in the thrust direction in the reference correspondence information in the thrust direction" is an initial position (a machine center described later), a position where the rotor 36 is displaced from the initial position to the front side by the maximum distance (hereinafter referred to as " front position"), and a position where the rotor 36 is displaced from the initial position to the rear side by the maximum distance (hereinafter referred to as" "rear position"). The "maximum distance" is a distance between the initial position and the position of the rotor 36 when the bearings 32 and 33 are worn by the maximum displacement amount, for example. As described above, the amount of displacement of the rotor 36 in the thrust direction with respect to the stator 37 means the amount of wear of the bearings 32 and 33 in the thrust direction. That is, the reference correspondence information in the thrust direction indicates the correspondence between the amount of wear of the bearings 32 and 33 in the thrust direction and the difference value (the voltage value) under the reference driving condition. In the following description, the difference value at the initial position is referred to as a thrust center value, the difference value at the front position is referred to as a front value, and the difference value at the rear position is referred to as a rear value.

The "offset information" is information (e.g., a voltage value) indicating an offset voltage to be added to or subtracted from the combined signal C2C4 in the offset processing.

The "offset processing" means processing for adding or subtracting the offset voltage to or from the combined signal C2C4 in such a way that a difference value between the combined signal C2C4 and the combined signal C6C8 correctly indicates the amount of displacement of the rotor 36 in the thrust direction (the amount of wear of the bearings 32 and 33 in the thrust direction) under the reference driving condition.

The "reference correspondence information in the radial direction" is information indicating a correspondence between a position (an amount of displacement) of the rotor 36 in the radial direction with respect to the stator 37 and a voltage value (a difference value) of each combined signal (C1C3, C5C7) under the reference driving condition. The "position of the rotor 36 in the radial direction in the reference correspondence information in the radial direction" includes an initial position and a position of the rotor 36 when the bearings 32 and 33 are worn by the maximum displacement amount in the radial direction (hereinafter referred to as "radial position"). As described above, the amount of displacement of the rotor 36 in the radial direction with respect to the stator 37 means the amount of wear of the bearings 32 and 33 in the radial direction. That is, the reference correspondence information in the radial direction indicates the correspondence between the amount of wear of the bearings 32 and 33 in the radial direction and the difference value (the voltage value) under the reference driving condition. In the following description, the difference value at the initial position is referred to as a radial center value, and the difference value at the radial position is referred to as a radial value.

The "display information" is information indicating a relation between the amount of displacement of the rotor 36 with respect to the stator 37 (the amount of wear of the bearings 32 and 33) and a display mode of light emitting diodes (LEDs) in the display 57. In the display information, the amount of displacement (the amount of wear) is represented by a ratio to the maximum amount of displacement (the maximum amount of wear). The ratio is common under each driving condition.

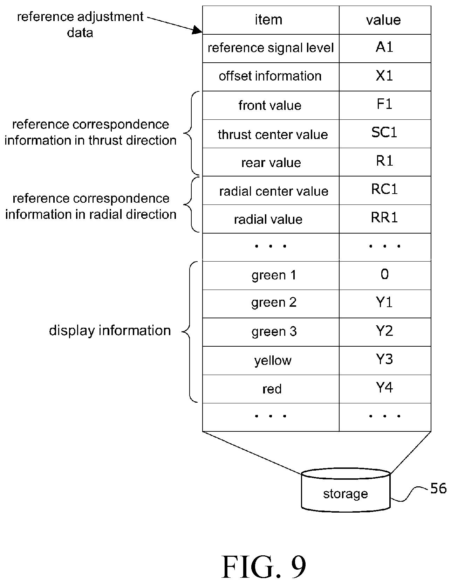

Fig. 9 is a schematic diagram illustrating an example of the information, i.e., the reference adjustment data, stored in the storage 56. The figure exemplarily illustrates a part of the reference adjustment data. The figure illustrates that the reference signal level (the reference amplitude), the reference correspondence information in the thrust direction, the offset information, the reference correspondence information in the radial direction, and the display information are stored as the reference adjustment data in the storage 56 in association with one another, for example.

The figure illustrates that the reference signal level (the reference amplitude) is "A1", the voltage value of the offset information is "X1", the front value is "F1", the thrust center value is "SC1", the rear value is "R1", the radial center value is "RC1", and the radial value is "RR1", for example.

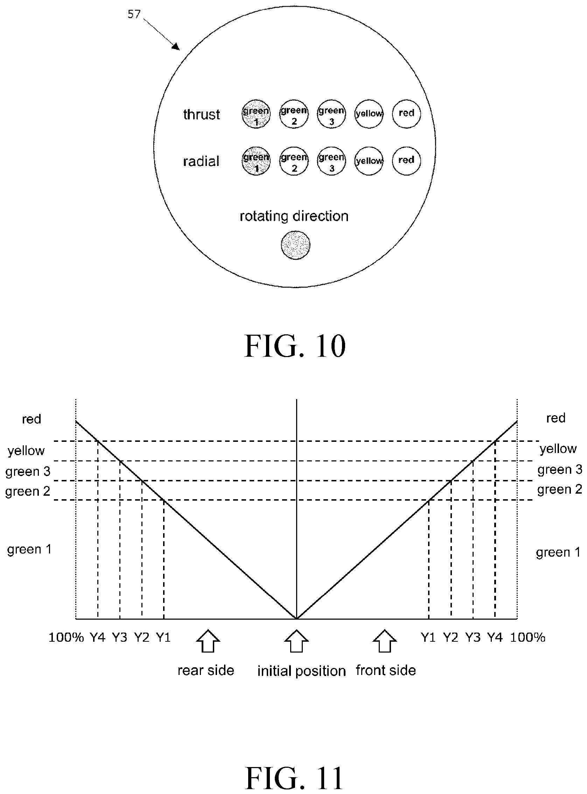

Fig. 10 is a schematic diagram illustrating an appearance of the display 57.

The display 57 displays the amount of wear of the bearings 32 and 33 and the rotating direction. The display 57 includes a plurality of light emitting diodes (LED) that displays the amount of wear in the radial direction and the thrust direction, and the rotating direction, for example. The display 57 displays the amount of wear in the radial direction and the thrust direction in five stages of "green 1", "green 2", "green 3", "yellow", and "red" and displays the rotating direction in lighting-on (normal rotation) and lighting-off (reverse rotation).

Fig. 11 is a schematic diagram illustrating a display mode of the display 57 in the thrust direction. In the figure, the vertical axis indicates the difference value (the voltage value), and the horizontal axis indicates the amount of displacement of the rotor 36 in the thrust direction (the amount of wear of the bearings 32 and 33 in the thrust direction). In the figure, a straight line is a line connecting the thrust center value to the front value and connecting the thrust center value to the rear value and indicates correspondence information in the thrust direction described later. Since the difference value between the combined signals C2C4 and C6C8 is proportional to the amount of wear, the amount of wear can be uniquely identified based on the difference value, and the display mode of the display 57 can also be identified, as illustrated in Fig. 11. When it is assumed that the maximum amount of displacement (the maximum amount of wear) of the bearings 32 and 33 is "100%", the display 57 turns on the first "green 1" when the amount of wear is "less than Y1%", turns on the second "green 2" when the amount of wear is "Y1% or more and less than Y2%", turns on the third "green 3" when the amount of wear is "Y2% or more and less than Y3%", turns on "yellow" when the amount of wear is "Y3% or more and less than Y4%", and turns on "red" when the amount of wear is "Y4% or more", for example.
Referring now back to Fig. 4, the D/A converter 58 converts the offset information input from the controller 55 from a digital signal to an analog signal and transmits the converted analog signal to the offset processing unit 59.

The offset processing unit 59 executes the offset processing, based on the offset information included in the reference adjustment data. The offset processing unit 59 includes an offset voltage generation circuit, an arithmetic circuit, and a difference absolute value conversion circuit, for example. The offset processing unit 59 generates an offset voltage, based on the offset information in the offset voltage generation circuit, and executes the offset processing for the combined signal C2C4 by adding or subtracting the offset voltage to or from the combined signal C2C4 in the arithmetic circuit. The offset processing unit 59 calculates (generates) a difference value between the combined signal C2C4 after the offset processing in the arithmetic circuit and the combined signal C6C8 and converts the difference value into an absolute value in the difference absolute value conversion circuit. The absolute value is input to the controller 55.

### Operation of Canned Motor Pump (Motor Bearing Wear Monitoring Device (1))

Next, operations of the canned motor pump 1 will be described below with a focus on operations of the present device 5. In the following description, Figs. 1 to 11 will be referred to as appropriate.

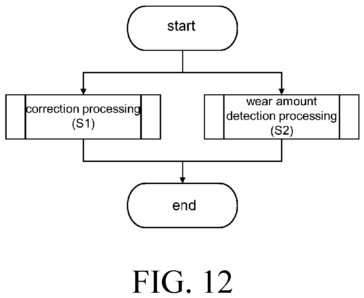

Fig. 12 is a flowchart illustrating an example of the operations of the present device 5.

When the canned motor pump 1 is in operation, the motor unit 3 is supplied with a power source under a predetermined driving condition, and the rotor 36, the rotating shaft 31, and the impeller 21 rotate at a predetermined number of revolutions. In this case, the present device 5 repeatedly executes correction processing (S1) and wear amount detection processing (S2) on a regular basis (e.g., every 1sec).

### Correction Processing

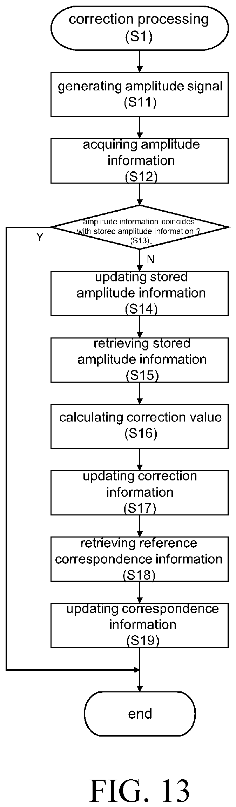

Fig. 13 is a flowchart illustrating an example of the correction processing (S1).

The "correction processing (S1)" is processing in which, when the canned motor pump 1 is in operation, the present device 5 acquires current amplitude information, acquires correction information based on the current amplitude information, and corrects (updates) current adjustment data. In the present embodiment, the correction processing (S1) is an example of the present method.

The "current adjustment data" is information that is appropriately updated depending on the current driving condition, with the reference adjustment data used as the reference. The current adjustment data includes the correspondence information in the thrust direction, the offset information, the correspondence information in the radial direction, the display information, and the like. The present device 5 retrieves the reference adjustment data from the storage 56 after the power is turned on and stores each parameter of the reference adjustment data in the RAM55b as an initial parameter of the current adjustment data.

The "current amplitude information" is the current (latest) amplitude information to be obtained when the canned motor pump 1 is operated under the current (latest) driving condition. That is, the current amplitude information is information indicating the current (latest) signal level (amplitude) of the fundamental component, and the value thereof is represented by a voltage value.

The "correction information" is information indicating a correction value to be calculated by the correction unit 551, based on the reference amplitude information and the current amplitude information. Details of the correction information will be described later. In the present embodiment, the correction information is represented by a ratio between the reference amplitude information and the current amplitude information, i.e., a ratio of a voltage value of the current (latest) amplitude signal to a voltage value of the reference amplitude signal.

The "correspondence information in the thrust direction" is information indicating a correspondence between a position (an amount of displacement) of the rotor 36 in the thrust direction with respect to the stator 37 and a difference value between the combined signal C2C4 and the combined signal C6C8 under the current (latest) driving condition. The voltage values corresponding to the initial position, the front position, and the rear position in the correspondence information in the thrust direction are values obtained by multiplying each voltage value in the reference correspondence information in the thrust direction by the correction value. The correspondence information in the thrust direction indicates the correspondence between the amount of wear of the bearings 32 and 33 in the thrust direction and the difference value under the latest driving condition.

The "correspondence information in the radial direction" is information indicating a correspondence between a position (an amount of displacement) of the rotor 36 in the radial direction with respect to the stator 37 and a voltage value (a difference value) of each combined signal (C1C3, C5C7) under the current (latest) driving condition. The voltage values corresponding to the initial position and the radial position in the correspondence information in the radial direction are values obtained by multiplying each voltage value in the reference correspondence information in the radial direction by the correction value. The correspondence information in the radial direction indicates the correspondence between the amount of wear of the bearings 32 and 33 in the radial direction and the difference value under the latest driving condition.

First, the signal generation unit 53 generates a current (latest) amplitude signal, based on each detection signal from the detection coils C1, C3, C5, and C7 (S11). Specifically, the signal generation unit 53 generates a DC signal of each detection signal and generates the amplitude signal by adding up all the DC signals. As described above, the amplitude signal functions as information indicating only the amplitude of the fundamental component that does not include the information indicating the displacement in the radial direction. The generated amplitude signal is converted into a digital signal in the A/D converter 54 and is input to the controller 55 (the correction unit 551).

Then, the correction unit 551 acquires the current amplitude information, i.e., the voltage value, based on the amplitude signal from the signal generation unit 53 (S12).

Then, the correction unit 551 retrieves the amplitude information previously acquired and stored in the RAM55b (hereinafter referred to as "stored amplitude information") and compares the acquired current amplitude information with the stored amplitude information (S13).

When the acquired current amplitude information coincides with the stored amplitude information ("Y" in S13), the present device 5 ends the correction processing (S1).

In contrast, when the acquired current amplitude information does not coincide with the stored amplitude information ("N" in S13), the correction unit 551 updates the stored amplitude information stored in RAM55b with the acquired current amplitude information (S14). That is, new amplitude information is stored in the RAM55b as the stored amplitude information.

Then, the correction unit 551 retrieves the reference amplitude information from the storage 56 and also retrieves the stored amplitude information from the RAM55b (S15).

Then, the correction unit 551 calculates a correction value, based on the reference amplitude information and the stored amplitude information (S16). Specifically, the correction unit 551 calculates, as the correction value, the ratio of the voltage value of the current (latest) amplitude signal that is the current amplitude information to the voltage value of the reference amplitude signal that is the reference amplitude information. That is, for example, when the voltage value of the reference amplitude signal is "1.0 mV" and the voltage value of the amplitude signal is "1.5 mV", the correction value is 1.5 / 1.0 = 1.5.

As described above, the signal level (the amplitude) of the fundamental component of the detection signal increases and decreases in proportion to an increase and decrease in the driving condition (the driving frequency, the driving voltage). Thus, the difference values of the detection signals and the difference value of the combined signals each increase and decrease in proportion to the increase and decrease in the driving condition. As described later, the amount of wear of the bearings 32 and 33 is calculated (detected) by the ratio of the difference value to the voltage value (the front value, the rear value, and the radial value) of the maximum displacement amount in the pieces of correspondence information in the thrust direction and the radial direction. Both pieces of correspondence information are set under the reference driving condition. Thus, when the driving condition is changed, the present device 5 cannot detect the accurate amount of wear depending on the driving condition unless either both pieces of correspondence information or the detected difference value is corrected depending on the driving condition. Herein, as described above, the correction value is the ratio of the voltage value of the amplitude signal to the voltage value of the reference amplitude signal. That is, the correction value increases and decreases in proportion to the increase and decrease in the driving condition. Accordingly, the present device 5 is able to detect the accurate amount of wear depending on the driving condition by performing the correction by multiplying the voltage value of the maximum amount of displacement by the correction value or by performing the correction by multiplying the difference value by the reciprocal of the correction value. In the present embodiment, the present device 5 performs the correction by multiplying the voltage value of the maximum displacement amount by the correction value, i.e., the correction of both pieces of correspondence information in the thrust direction and the radial direction.

Then, the correction unit 551 updates the correction information stored in the RAM55b with the calculated correction value (S17). That is, new correction information is stored in the RAM55b as the stored amplitude information.

Then, the correction unit 551 retrieves the correction information from the RAM55b and also retrieves both pieces of reference correspondence information in the thrust direction and the radial direction from the storage 56 (S18).

Then, the correction unit 551 multiplies each parameter (e.g., the front value, the rear value, and the radial value) of both pieces of reference correspondence information in the thrust direction and the radial direction by the correction value, and updates both pieces of correspondence information in the thrust direction and the radial direction stored in the RAM55b with each parameter after the multiplication (S19). In other words, the correction unit 551 corrects each piece of correspondence information by using each piece of reference correspondence information and the correction value. As a result, new pieces of correspondence information in the thrust direction and the radial direction corresponding to the driving condition is stored (updated) in the RAM55b.

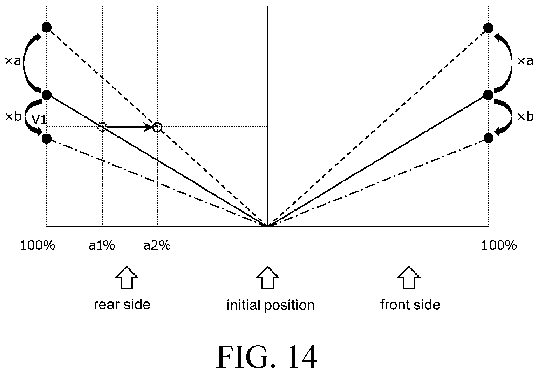

Fig. 14 is a schematic diagram illustrating an example of the correction (the correction of the correspondence information in the thrust direction) to be executed in the correction processing (S1). In the figure, the vertical axis indicates the difference value (the voltage value), and the horizontal axis indicates the amount of displacement of the rotor 36 in the thrust direction (the amount of wear of the bearings 32 and 33 in the thrust direction). The solid line in the figure illustrates an example of the reference correspondence information in the thrust direction before the correction, the dashed line in the figure illustrates an example of the correspondence information in the thrust direction after the correction, and the dash-dotted line in the figure illustrates another example of the correspondence information in the thrust direction after the correction. The figure illustrates that the correspondence information in the thrust direction is corrected as indicated by the dashed line by multiplying the front value and the rear value by a correction value "a". The figure also illustrates that the amount of wear corresponding to a voltage value "V1" is corrected from "a1%" to "a2%" by the correction. The figure also illustrates that the correspondence information in the thrust direction is corrected as indicated by the dash-dotted line by multiplying the front value and the rear value by a correction value "b".

### Wear Amount Detection Processing

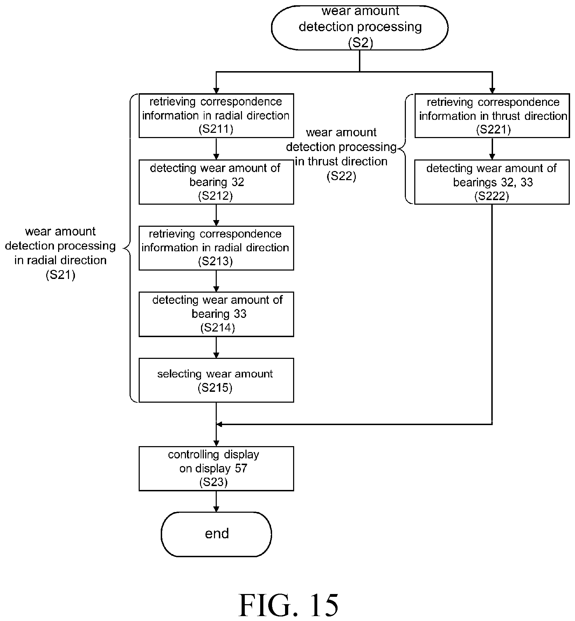

Fig. 15 is a flowchart illustrating an example of wear amount detection processing (S2).

The "wear amount detection processing (S2)" is processing for detecting the amount of wear of the bearings 32 and 33, based on each of the combined signals C1C3, C5C7, C2C4, and C6C8.

The detection coils C1 to C8 output the detection signals at all times when the rotor 36 rotates. The detection signals from the detection coils C1, C3, C5, and C7 that detect the displacement in the radial direction are combined in the signal processing circuits 52a and 52b and converted from alternating current to direct current. Then, the combined signals C1C3 and C5C7 are converted from analog signals to digital signals in the A / D converter 54 and input to the controller 55 (the wear amount detection unit 550).

In contrast, the detection signals (each of the combined signals C2C4 and C6C8) from the detection coils C2, C4, C6, and C8 that detect the displacement in the thrust direction are converted from alternating current to direct current in the signal processor circuits 52c and 52d. Then, each of the combined signals C2C4 and C6C8 is input to the offset processing unit 59. In the offset processing unit 59, the offset processing is executed for the combined signal C2C4. An absolute value of the difference value between the combined signal C2C4 after the offset processing and the combined signal C6C8 is calculated. The combined signal C2C4 after the offset processing, the combined signal C6C8, and the absolute value are converted from analog signals to digital signals in the A / D converter 54 and input to the controller 55 (the wear amount detection unit 550).

In the wear amount detection processing (S2), the wear amount detection unit 550 separately executes wear amount detection processing in the radial direction (S21) and wear amount detection processing in the thrust direction (S22).

In the wear amount detection processing in the radial direction (S21), the wear amount detection unit 550 retrieves the correspondence information in the radial direction stored in RAM55b (S211) and detects the amount of wear of the bearing 32, based on the correspondence information and the voltage value of the combined signal C1C3 (S212). Similarly, the wear amount detection unit 550 retrieves the correspondence information in the radial direction (S213) and detects the amount of wear of the bearing 33, based on the correspondence information and the voltage value of the combined signal C5C7 (S214). Then, the wear amount detection unit 550 compares the amounts of wear with each other and selects the larger amount of wear as the amount of wear in the radial direction (S215). The detected amount of wear is stored in the storage 56 as log information, for example.

In the wear amount detection processing in the thrust direction (S22), the wear amount detection unit 550 retrieves the correspondence information in the thrust direction stored in the RMA55b (S221), and detects the amount of wear of the bearings 32 and 33 in the thrust direction, based on the correspondence information and the difference value (the absolute value) (S222). In this case, the wear amount detection unit 550 identifies whether the wear is on the front side or the rear side, based on a magnitude relation between the voltage value of the combined signal C2C4 after the offset and the voltage value of the combined signal C6C8. The detected amount of wear is stored in the storage 56 as log information, for example.

Then, the display control unit 552 determines a display mode of the display 57, based on the detected amount of wear, and controls a display on the display 57 in such a way that the display on the display 57 is performed in the determined display mode (S23).

**In** this way, the present device 5 corrects, depending on the driving condition, the pieces of correspondence information in the thrust direction and the radial direction in the correction processing (S1), and detects the amount of wear by using the pieces of corrected correspondence information in the thrust direction and the radial direction in the wear amount detection processing (S2). Thus, as described above, the wear amount detection unit 550 is able to detect the accurate amount of wear depending on the driving condition. That is, the present device 5 is able to maintain the detection accuracy of the amount of wear even when the driving condition is changed.

### Conclusion (1)

According to the embodiment described above, each of the plurality of detection coils C1 to C8 outputs the detection signal indicating the change in the magnetic flux corresponding to the mechanical position change of the rotor 36 with respect to the stator 37 and the plurality of detection coils C1, C3, C5, and C7 that each detects the change in the magnetic flux in the radial direction and the plurality of detection coils C2, C4, C6, and C8 that each detects the change in the magnetic flux in the thrust direction are included. The detection signal includes the fundamental component based on the driving frequency of the motor unit 3. The present device 5 includes the RAM55b, the wear amount detection unit 550, the signal generation unit 53, the correction unit 551, and the storage 56. The RAM55b (the storage 56) stores the pieces of correspondence information (the pieces of reference correspondence information) in the thrust direction and the radial direction. The wear amount detection unit 550 detects the amount of wear of the bearings 32 and 33 in the radial direction, based on the difference (the first difference) between each detection signal of the pair of detection coils C1 and C3 and the difference (the first difference) between each detection signal of the pair of detection coils C5 and C7, and detects the amount of wear of the bearings 32 and 33 in the thrust direction, based on the difference (the second difference) between the combined signal C2C4 of each of the pair of detection coils C2 and C4 and the combined signal C6C8 of each of another pair of detection coils C6 and C8. The signal generation unit 53 generates an amplitude signal indicating the amplitude of the fundamental component, based on the detection signals (the DC signals) to be used to generate the differences (the first differences). The correction unit 551 corrects, depending on the driving condition (the driving frequency and the driving voltage), the piece of correspondence information in the thrust direction and the radial direction, based on the amplitude signal. According to this configuration, the present device 5 generates the amplitude signal, based on the detection signals of the detection coils C1, C3, C5, and C7 to be used to generate the differences. Thus, the present device 5 is able to cancel the displacement information in the amplitude signal and is able to include only the amplitude (the signal level) of the fundamental component that increases and decreases in proportion to the increase and decrease of the driving condition. As a result, the correction unit 551 is able to correct, depending on the driving condition, the pieces of correspondence information in the thrust direction and the radial direction without any influence from the displacement information. Accordingly, the present device 5 is able to maintain the detection accuracy of the amount of wear without manual operation for the device even though the driving condition is changed.

According to the embodiment described above, the signal generation unit 53 generates the amplitude signal by adding up the detection signals (the DC signals) to be used for generating the difference (the first difference). According to this configuration, the increase and decrease of the harmonic components included in the detection signals of the pair of detection coils C1 and C3 are canceled, and the increase and decrease of the harmonic components included in the detection signals of the another pair of detection coils C5 and C7 are canceled. Thus, the amplitude signal does not include the displacement information of the rotor 36 and functions as information indicating only the amplitude of the fundamental component. The signal level of the amplitude signal is proportional to the signal level of the fundamental component. As a result, the correction unit 551 is able to correct, depending on the driving condition, the pieces of correspondence information in the thrust direction and the radial direction without any influence from the displacement information. Accordingly, the present device 5 is able to maintain the detection accuracy of the amount of wear without manual operation for the device even though the driving condition is changed.

According to the embodiment described above, the signal generation unit 53 adds up the detection signals (the DC signals) output from all the radial detection coils. According to this configuration, in the amplitude signal, all the displacement information in the radial direction on the front side and the rear side is canceled out. Thus, the correction unit 551 is able to correct, depending on the driving condition, the pieces of correspondence information in the thrust direction and the radial direction without any influence from the displacement information. Accordingly, the present device 5 is able to maintain the detection accuracy of the amount of wear without manual operation for the device even though the driving condition is changed.

According to the embodiment described above, the storage 56 stores the reference amplitude information indicating the amplitude of the fundamental component at a predetermined reference frequency of the motor unit 3. The correction unit 551 corrects the pieces of correspondence information in the thrust direction and the radial direction, based on the ratio (the correction value) between the voltage value of the amplitude to be acquired based on the amplitude signal (the stored amplitude information) and the voltage value of the reference amplitude to be acquired based on the reference amplitude information (the reference amplitude information). According to this configuration, the present device 5 is able to acquire the correction value proportional to the increase and decrease of the driving condition. As a result, the correction unit 551 is able to correct, depending on a change in the driving condition, the pieces of correspondence information in the thrust direction and the radial direction.

Note that, in the embodiment described above, the signal generation unit 53 may generate the amplitude signal being the average of the four detection signals (the DC signals) instead of the sum thereof.

In the embodiment described above, the signal generation unit 53 may generate the amplitude signal by adding up only the detection signals of the pair of detection coils C1 and C3 or may generate the amplitude signal by adding up only the detection signals of the pair of detection coils C5 and C7.

In the embodiment described above, the controller 55 may function as the signal generation unit. This configuration eliminates the need for a group of circuits that constitutes the signal generation unit 53 and simplifies the circuit configuration.

In the embodiment described above, the adjustment data such as the pieces of correspondence information in the thrust direction and the radial direction, the amplitude information, etc., may be stored in the storage 56 instead of the RAM55b Motor Bearing Wear Monitoring Device (2)

Next, another embodiment (hereinafter referred to as "second embodiment") of the motor bearing wear monitoring device according to the present invention will be described with a focus on differences from the previously described embodiment (hereinafter referred to as "first embodiment"). In the second embodiment, the configuration and the method for acquiring the amplitude signal are different from those in the first embodiment. In the following description, components in common with the first embodiment are indicated with the same reference signs, and the description thereof will be omitted.

### Configuration of Motor Bearing Wear Monitoring Device (2)

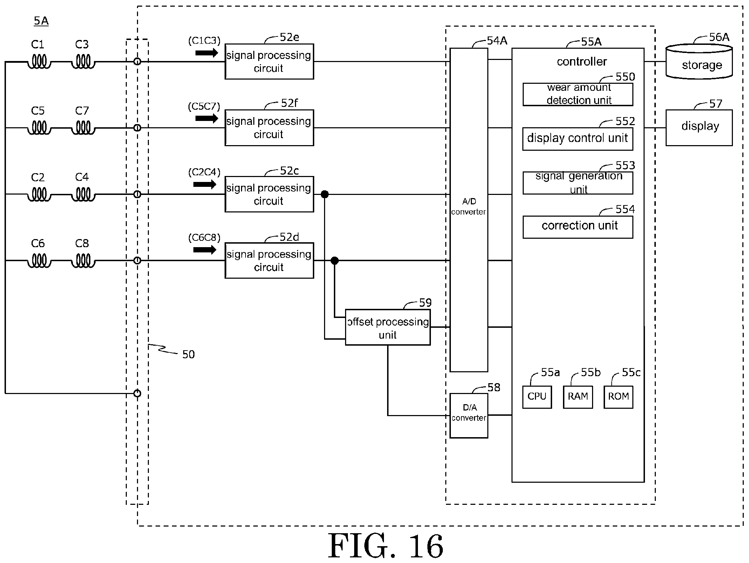

Fig. 16 is a functional block diagram illustrating the another embodiment (the second embodiment) of the present device.

A present device 5A includes eight detection coils C1 to C8, the connection 50, the signal processing circuits 52c, 52d, 52e, and 52f, an A/D converter 54A, a controller 55A, a storage 56A, the display 57, the D/A converter 58, and the offset processing unit 59. The A/D converter 54A, the controller 55A, and the D/A converter 58 are implemented by a microcomputer, for example.

The detection coils C1 and C3 constitute a pair of radial detection coils and are connected so that the detection signals thereof cancel each other out. The detection coils C5 and C7 constitute another pair of radial detection coils and are connected so that the detection signals thereof cancel each other out. Thus, the combined signal C1C3 of the detection coils C1 and C3 indicates a difference (the first difference) between each detection signal of the detection coils C1 and C3. The amount of displacement of the rotor 36 in the radial direction on the front side is detected due to the difference. That is, the difference indicates the amount of wear of the bearing 32 in the radial direction, and the value of the difference is represented by a voltage value. The combined signal C5C7 of the detection coils C5 and C7 indicates a difference (the first difference) between each detection signal of the detection coils C5 and C7. The amount of displacement of the rotor 36 in the radial direction on the rear side is detected due to the difference. That is, the difference indicates the amount of wear of the bearing 33 in the radial direction, and the value of the difference is represented by a voltage value.

The signal processing circuits 52e and 52f include a filter circuit, a rectifier circuit, and an integrating circuit, for example. The filter circuit is a band-pass filter having a pass band (e.g., several 100 Hz to 2 kHz) that allows harmonic components to pass through. The signal processing circuit 52e is connected to the detection coils C1 and C3, and the signal processing circuit 52f is connected to the detection coils C5 and C7. The signal processing circuits 52c and 52d execute predetermined signal processing (filtering processing, rectifying, and AC-DC conversion) for the corresponding combined signals C1C3 and C5C7, respectively, and convert the combined signals C1C3 and C5C7 from alternating current to direct current.

The A/D converter 54A is connected to the signal processing circuits 52c to 52f and the offset processing unit 59, and converts an analog signal input from each of the circuits and the unit to a digital signal and outputs the digital signal to the controller 55A.

The controller 55A controls the operation of the whole present device 5A. The controller 55A includes, for example, a processor such as the CPU 55a, a volatile memory such as the RAM 55b that functions as a working area for the CPU 55a, and a non-volatile memory such as the ROM 55c that stores various kinds of information such as the present program and other control programs. The controller 55A includes the wear amount detection unit 550, the display control unit 552, a signal generation unit 553, and a correction unit 554.

In the controller 55A, the present program operates, and the present program cooperates with the hardware resources of the present device 5A and achieves each method described later. By causing the processor (the CPU 55a) included in the controller 55A to execute the present program, the present program enables the processor to function as the wear amount detection unit 550, the display control unit 552, the signal generation unit 553, and the correction unit 554, and enables the processor to execute the present method. The present program may be stored in an installable file format or a non-transitory storage medium, e.g., a compact disk (CD), a digital versatile disc (DVD), a universal serial bus (USB) memory, etc., in an executable file format and provided to the present device 5A via a dedicated reading medium.

The signal generation unit 553 generates an amplitude signal, based on the combined signal C2C4 and the combined signal C6C8. A specific operation of the signal generation unit 553 will be described later.

The correction unit 554 corrects, depending on the driving condition, the voltage value (the difference value) of the combined signals C1C3 and C5C7 and the difference value between the combined signal C2C4 and the combined signal C6C8, based on the amplitude signal from the signal generation unit 553. A specific operation of the correction unit 554 will be described later.

The storage 56A stores information (e.g., reference adjustment data, a weight coefficient described later, etc.,) necessary for the operation of the present device 5A. The storage 56A is a non-volatile memory such as an EEPROM or a flash memory, for example.

### Operation of Canned Motor Pump (Motor Bearing Wear Monitoring Device (2))

Next, operations of the canned motor pump 1 will be described below with a focus on operations of the present device 5A. In the following description, Figs. 1 to 3 and Fig. 16 will be referred to as appropriate.

When the canned motor pump 1 is in operation, the present device 5A repeatedly executes correction information acquisition processing (S3) and wear amount detection processing (S4) on a regular basis (e.g., every 1 sec), instead of the correction processing (S1) and the wear amount detection processing (S2) in the first embodiment. In the present embodiment, the correction information acquisition processing (S3) and the wear amount detection processing (S4) are examples of the present method.

### Correction Information Acquisition Processing

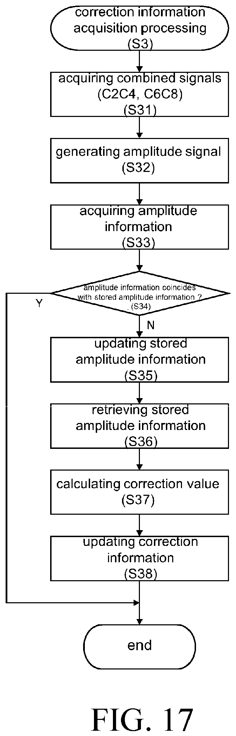

Fig. 17 is a flowchart illustrating an example of the correction information acquisition processing (S3).

The "correction information acquisition processing (S3)" is processing in which, when the canned motor pump 1 is in operation, the present device 5A acquires the amplitude information and acquires and updates the correction information, based on the amplitude information. The present device 5A retrieves the reference adjustment data and a weight coefficient from the storage 56A after the power is turned on and stores the retrieved reference adjustment data and weight coefficient in the RAM55b. In this case, each parameter of the reference adjustment data is stored as an initial parameter of the adjustment data. The weight coefficient is a model-specific preset value that is set in advance for each model of the canned motor pump 1. Details of the weight coefficient will be described later.

First, the signal generation unit 553 acquires the combined signal C2C4 and the combined signal C6C8 (S31). As described above, each acquired combined signal (C2C4, C6C8) is a DC digital signal.

Then, the signal generation unit 553 generates the amplitude signal by weighting each of the combined signals C2C4 and C6C8 and adding up the weighted combined signals C2C4 and C6C8 (S32). The weighting is performed by multiplying the voltage value of each combined signal (C2C4, C6C8) by the weight coefficient.

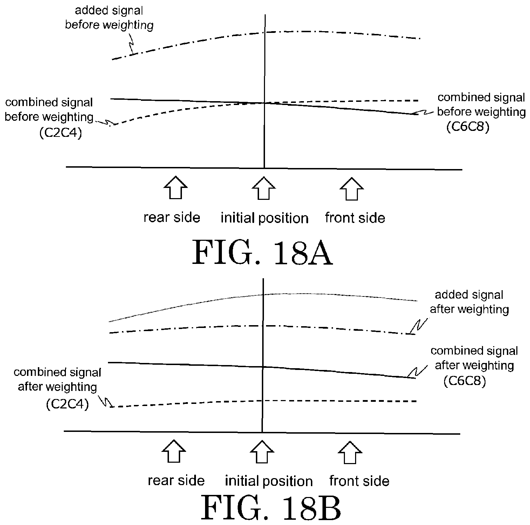

Fig. 18 is a schematic diagram illustrating the weighting by the signal generation unit 553, in which Fig. 18A illustrates a state before the weighting and Fig. 18B illustrates a state after the weighting. In the figures, the vertical axis indicates the signal level (the voltage), and the horizontal axis indicates the amount of displacement of the rotor 36 in the thrust direction (the amount of wear of the bearings 32 and 33). For convenience of description, Fig. 18B illustrates a state before the weighting with a thin line. For convenience of description, the figures emphasize and illustrate changes in voltage values.

As described above, the voltage value of each of the combined signals C2C4 and C6C8 decreases in a curved shape with respect to the displacement of the rotor 36 on one direction side in the thrust direction, and the voltage value of each of the combined signals C2C4 and C6C8 becomes substantially constant with respect to the displacement of the rotor 36 on the other direction side in the thrust direction. The change in the curved shape indicates the displacement information of the rotor 36 in the thrust direction. Thus, when the combined signal C2C4 and the combined signal C6C8 are simply added up, the added signal includes the displacement information of the rotor 36 in the thrust direction. As a result, as illustrated in Fig. 18A, the change in the voltage value of the added signal with respect to the position of the rotor 36 illustrated with dash-dotted line becomes a slightly upward convex curve shape and does not become constant. The detection sensitivity (the change in the voltage value) of the detection coils C2 and C4 on the front side and the detection coils C6 and C8 on the rear side with respect to the displacement of the rotor 36 is influenced by an initial position determined for each model of the canned motor pump 1 and by a magnetic circuit. Thus, the detection sensitivity of the detection coils C2 and C4 may be different from the detection sensitivity of the detection coils C6 and C8. Accordingly, as illustrated in Fig. 18A, there may be a state where the change in the combined signal C2C4 is larger than the change in the combined signal C6C8. In this case, as illustrated in Fig. 18A, the voltage value of the added signal varies in a positively-sloped curved shape in the front-rear direction. The above-described "weighting coefficient" is a coefficient that is multiplied by the voltage value of each of the combined signals C2C4 and C6C8 in such a way as to cancel out the change in the voltage value (the displacement information), based on the change in the magnetic flux. That is, the weighting is performed in such a way as to cancel (decrease) a curve-shaped change (and a change such as to be sloped) in the voltage value of each of the combined signals C2C4 and C6C8. The weighting coefficient is set to, for example, "1.0" or a decimal fraction less than "1.0" (except for 0: in the example illustrated in Fig. 18, "0.5" for the combined signal C2C4 and "1.0" for the combined signal C6C8 are set.). In this case, the smaller the weight coefficient (approaching 0), the smaller the change in the voltage value after the weighting. Accordingly, for example, when the change in the voltage value of the combined signal C2C4 is smaller than the change in the combined signal C6C8, the value of the weight coefficient for the combined signal C2C4 is set (to a value close to "1.0") larger than the value of the weight coefficient for the combined signal C6C8. For example, when both changes are approximately the same, the values of both weight coefficients are set to the same value. For example, when the change in the voltage value of the added signal is sloped, the value of the weight coefficient for the side with a large contribution to the slope is set (to a value close to "0") smaller than the value of the weight coefficient for the side with a small contribution to the slope. As a result of the weighting, in the combined signal C2C4 weighted by less than "1.0", the change in the voltage value, i.e., the displacement information, decreases, and the change in the voltage value is corrected in such a way as to be substantially constant regardless of the position of the rotor 36 (in such a way as to approach linearly) as illustrated in Fig. 18B. Thus, the change in the voltage value of the added signal that varies in a positively-sloped curved shape is also small, and the change is substantially constant. By setting the weighting coefficient in this way, the change in the voltage value of each of the combined signals C2C4 and C6C8 becomes small, and the curve-shaped change (and the change such as to be sloped) also becomes small. The weighting coefficient is measured in advance prior to shipment of the canned motor pump 1 in a predetermined reference driving condition and stored in the storage 56, for example.

Note that, in the present invention, the weighting may be performed using a function that cancels the displacement information. In this case, the storage 56 stores the function instead of the weighting coefficient.

In the present invention, the weight coefficient of the combined signal C2C4 on the front side may be different from or the same as the weight coefficient of the combined signal C6C8 on the rear side.

Referring now back to Fig. 17, then, the correction unit 554 acquires the current amplitude information (i.e., the voltage value), based on the amplitude signal (S33).

Then, the correction unit 554 retrieves stored amplitude information and compares the acquired current amplitude information with the stored amplitude information (S34).

When the acquired current amplitude information coincides with the stored amplitude information ("Y" in S34), the present device 5A ends the correction information acquisition processing (S3).

In contrast, when the acquired current amplitude information does not coincide with the stored amplitude information ("N" in S34), the correction unit 554 updates the stored amplitude information stored in RAM55b with the acquired current amplitude information (S35). That is, new amplitude information is stored in the RAM55b as the stored amplitude information.

Then, the correction unit 554 retrieves the reference amplitude information from the storage 56A and also retrieves the stored amplitude information from the RAM55b (S36).

Then, the correction unit 554 calculates a correction value, based on the reference amplitude information and the stored amplitude information (S37). The method for calculating the correction value is common to the correction processing (S1) in the first embodiment.

Then, the correction unit 554 updates the correction information stored in the RAM55b with the calculated correction value (S38). That is, the new correction information is stored in the RAM55b.

### Wear Amount Detection Processing

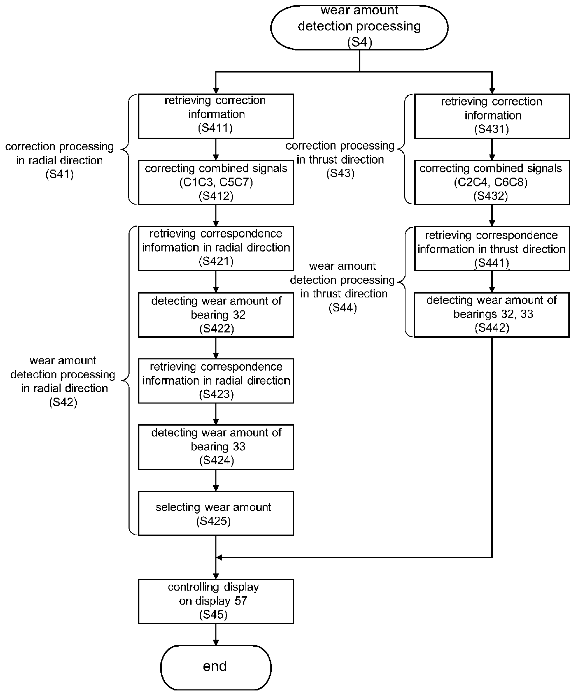

Fig. 19 is a flowchart illustrating an example of wear amount detection processing (S4).

The "wear amount detection processing (S4)" is processing for detecting the amount of wear of the bearings 32 and 33, based on each of the combined signals C1C3, C5C7, C2C4, and C6C8. The wear amount detection processing (S4) is different from the wear amount detection processing (S2) in the first embodiment in that the difference value (the voltage value) is corrected by the correction value.

The combined signals C1C3 and C5C7, the combined signal C2C4 after the offset processing, the combined signal C6C8, and the absolute value are converted from analog signals to digital signals in the A / D converter 54A and input to the controller 55 (the correction unit 554).

In the wear amount detection processing (S4), the wear amount detection unit 550 separately executes correction processing in the radial direction (S41) and wear amount detection processing in the radial direction (S42), and correction processing in the thrust direction (S43) and wear amount detection processing in the thrust direction (S44).

In the correction processing in the radial direction (S41), the correction unit 554 retrieves the correction information (the correction value) from the RAM55b (S411) and corrects the voltage value of each combined signal (C1C3, C5C7) by multiplying the voltage value (the difference value) of each acquired combined signal (C1C3, C5C7) by the reciprocal of the correction value (S412). Each corrected voltage value is input to the wear amount detection unit 550. Then, in the wear amount detection processing in the radial direction (S42), the wear amount detection unit 550 retrieves the correspondence information in the radial direction stored in RAM55b (S421) and detects the amount of wear of the bearing 32, based on the correspondence information and the voltage value of the corrected combined signal (C1C3) (S422). Similarly, the wear amount detection unit 550 retrieves the correspondence information in the radial direction stored in the RAM55b (S423) and detects the amount of wear of the bearing 33, based on the correspondence information and the voltage value of the corrected combined signal (C5C7) (S424). Then, the wear amount detection unit 550 compares the amounts of wear with each other and selects the larger amount of wear as the amount of wear in the radial direction (S425). The detected amount of wear is stored in the storage 56A as log information, for example. Herein, in the present embodiment, since the correspondence information in the radial direction is not corrected, the parameter thereof is the initial parameter (the parameter of the reference correspondence information in the radial direction).

In the correction processing in the thrust direction (S43), the correction unit 554 retrieves the correction information from the RAM55b (S431) and corrects the difference value by multiplying the acquired difference value (the absolute value) by the reciprocal of the correction value (S432). The corrected difference value is input to the wear amount detection unit 550. Then, in the wear amount detection processing in the thrust direction (S44), the wear amount detection unit 550 retrieves the correspondence information in the thrust direction stored in the RMA55b (S441), and detects the amount of wear of the bearings 32 and 33 in the thrust direction, based on the correspondence information and the corrected difference value (S442). In this case, the wear amount detection unit 550 identifies whether the wear is on the front side or the rear side, based on a magnitude relation between the voltage value of the combined signal C2C4 after the offset and the voltage value of the combined signal C6C8. The detected amount of wear is stored in the storage 56A as log information, for example. Herein, in the present embodiment, since the correspondence information in the thrust direction is not corrected, the parameter thereof is the initial parameter (the parameter of the reference correspondence information in the thrust direction).

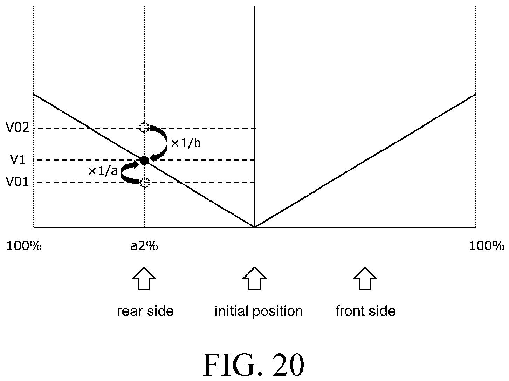

Fig. 20 is a schematic diagram illustrating an example of the correction by the correction unit 554. The figure illustrates the correction processing in the thrust direction (S43). In the figure, the vertical axis indicates the difference value (the voltage value), and the horizontal axis indicates the amount of wear of the bearings 32 and 33 in the thrust direction. In the figure, the solid line illustrates the correspondence information in the thrust direction (the reference correspondence information). The figure illustrates that, when the correction value is "a", the difference value corresponding to the amount of wear "a2%" is corrected from "V01" to "V1" by multiplying the difference value "V01" by the reciprocal "1 / a" of the correction value. The figure also illustrates that, when the correction value is "b", the difference value corresponding to the amount of wear "a2%" is corrected from "V02" to "V1", by multiplying the difference value "V02" by the reciprocal "1 / b" of the correction value. In this way, the correction unit 554 moves the difference value onto the solid line indicating the correspondence information in the thrust direction (the reference correspondence information). As a result, the wear amount detection unit 550 is able to detect the accurate amount of wear depending on the operating condition, based on the correspondence information in the thrust direction.

Then, the display control unit 552 determines a display mode of the display 57, based on the detected amount of wear, and controls a display on the display 57 in such a way that the display on the display 57 is performed in the determined display mode (S45).

In this way, in the wear amount detection processing (S4), the correction information (the correction value) acquired in the correction information acquisition processing (S3) is used, and the difference value is corrected in such a way as to conform to the pieces of reference correspondence information in the thrust direction and the radial direction. Thus, the wear amount detection unit 550 is able to detect the accurate amount of wear depending on the driving condition, based on the pieces of reference correspondence information in the thrust direction and the radial direction. That is, the present device 5A is able to maintain the detection accuracy of the amount of wear even when the driving condition is changed.

### Conclusion (2)

According to the embodiment described above, each of the plurality of detection coils C1 to C8 outputs the detection signal indicating the change in the magnetic flux corresponding to the mechanical position change of the rotor 36 with respect to the stator 37 and the plurality of detection coils C1, C3, C5, and C7 that each detects the change in the magnetic flux in the radial direction and the plurality of detection coils C2, C4, C6, and C8 that each detects the change in the magnetic flux in the thrust direction are included. The detection signal includes the fundamental component based on the driving frequency of the motor unit 3. The present device 5A includes the RAM55b, the wear amount detection unit 550, the signal generation unit 553, the correction unit 554, and the storage 56A. The RAM55b stores the pieces of correspondence information in the thrust direction and the radial direction. The wear amount detection unit 550 detects the amount of wear of the bearings 32 and 33 in the radial direction, based on the difference (the first difference) between each detection signal of the pair of detection coils C1 and C3 and the difference (the first difference) between each detection signal of the pair of detection coils C5 and C7, and detects the amount of wear of the bearings 32 and 33 in the thrust direction, based on the difference (the second difference) between the combined signal C2C4 of each of the pair of detection coils C2 and C4 and the combined signal C6C8 of each of another pair of detection coils C6 and C8. The signal generation unit 553 generates the amplitude signal by performing the weighting on each of the combined signals C2C4 and C6C8 to be used for calculating (generating) the difference (the second difference) in such a way as to cancel the information indicating the change in the position of the rotor 36 in the thrust direction and adding up the weighted combined signals C2C4 and C6C8. The correction unit 554 corrects, depending on the driving condition (the driving frequency and the driving voltage), each difference (the first difference and the second difference, i.e., the voltage values), based on the amplitude signal. According to this configuration, the present device 5A is able to substantially cancel out the displacement information in the amplitude signal, allowing the amplitude signal to mainly include the amplitude (the signal level) of the fundamental component that increases and decreases in proportion to the increase and decrease in the driving condition. As a result, the correction unit 554 is able to correct, depending on the driving condition, each difference value (each voltage value) with little influence from the displacement information. Accordingly, the present device 5A is able to maintain the detection accuracy for the amount of wear without manual operation for the device even though the driving condition is changed.

Note that, in the second embodiment described above, the signal generation unit 553 may generate an average as the amplitude signal instead of the sum of the two combined signals C2C4 and C6C8.

In the second embodiment described above, the change in the voltage value of the added signal between the combined signal C2C4 and the combined signal C6C8 with respect to the position of the rotor 36 is about 7 to 10% in the correction unit 554. Thus, even though the correction unit 554 generates the amplitude signal without weighting each of the combined signals C2C4 and C6C8, the influence on the correction value of the displacement information may be limited. Accordingly, the correction unit 554 may generate the amplitude signal without weighting each of the combined signals C2C4 and C6C8. In this configuration, since the influence of the displacement information remains greater in the amplitude signal than that in the second embodiment, the detection accuracy of the wear amount is slightly deteriorated when the wear in the thrust direction progresses. However, as described above, since the change in the added signal is in a slightly upwardly convex curve shape, the detection accuracy deteriorates in a direction that detects the amount of wear with slightly more sensitivity. Thus, the present device 5A is able to sufficiently function as the wear amount detection device for the bearings 32 and 33. Accordingly, even with this configuration, the present device 5A is able to maintain the detection accuracy for the amount of wear at a level required for the present device 5A without manual operation for the device even though the driving condition is changed.

### Other Embodiments

Note that, in the first embodiment described above, the correction unit 551 corrects the pieces of correspondence information in the thrust direction and the radial direction. Alternatively, the correction unit 551 may correct the combined signals C1C3 and C5C7 and the difference value between the combined signal C2C4 and the combined signal C6C8, similarly to the correction unit 554 in the second embodiment.

In the second embodiment described above, the correction unit 554 corrects the combined signals C1C3 and C5C7 and the difference value between the combined signal C2C4 and the combined signal C6C8. Alternatively, the correction unit 554 may correct the pieces of correspondence information in the thrust direction and the radial direction similarly to the correction unit 551 in the first embodiment.

In the correction processing (S1) in the first embodiment and the correction information generation processing (S3) in the second embodiment described above, the correction unit 551 may update the stored amplitude information at all times without comparing the acquired current amplitude information with the stored amplitude information.

In the embodiments described above, the center of the rotor 36 in the thrust direction at the initial position of the rotor 36 need not coincide with the center of the stator 37 due to manufacturing errors, position tolerances, and the like. That is, for example, in the initial position, the rotor 36 may be disposed with being dislocated to the thrust direction with respect to stator 37.

In the embodiments described above, the number of the detection coils C1 to C8 is not limited to "eight" as long as the present invention can be implemented.

In the embodiments described above, the reference adjustment data may be stored in advance together with the present program in a ROM55c included in the controller (55, 55A), instead of the storage (56, 56A). In this case, the ROM 55c functions as a storage in the present invention.

In the embodiments described above, the controller (54, 54A) may include a processor such as a digital signal processor (DSP), a micro processing unit (MPU), or the like, instead of the CPU 55a.

In the embodiments described above, the present method is executed by the controller (55, 55A). Alternatively, a part of the present method, e.g., the wear amount detection processing (S2), may be executed by an external device, e.g., a computer, etc., connected to the present device (5, 5A).

In the embodiments described above, a part or all of the information stored in the RAM 55b may be stored in the storage (56, 56A).

In the embodiments described above, the correction unit (551, 554) may calculate, as the correction value, the ratio of the voltage value of the reference amplitude signal being the reference amplitude information to the voltage value of the amplitude signal being the amplitude information. In this case, for example, each parameter (e.g., the front value, the rear value, and the radial value) of each piece of correspondence information is multiplied by the reciprocal of the correction value, and the difference value is multiplied by the correction value.

### Aspects of the Present Invention

Next, aspects of the present invention conceived from the embodiments described above will be described below with reference to the terms and reference signs described in the embodiments.

A first aspect of the present invention is a motor bearing wear monitoring device (e.g., the present devices 5, 5A) for monitoring a wear state of bearings (e.g., the bearings 32 and 33) that support a rotating shaft (e.g., the rotating shaft 31) of a rotor (e.g., the rotor 36) by detecting a change in magnetic flux corresponding to a mechanical position change of the rotor with respect to a stator (e.g., the stator 37) of a motor (e.g., the motor unit 3) in a canned motor pump (e.g., the canned motor pump 1) by using a plurality of detection coils (e.g., the detection coils C1 to C8) attached to the stator, in which each of the plurality of detection coils outputs a detection signal indicating the change in the magnetic flux and including a fundamental component based on a driving frequency of the motor, and the plurality of detection coils includes a plurality of radial detection coils (e.g., the detection coils C1, C3, C5, and C7) that each detects the change in the magnetic flux in a radial direction of the rotating shaft and a plurality of thrust detection coils (e.g., the detection coils C2, C4, C6, and C8) that each detects the change in the magnetic flux in a thrust direction of the rotating shaft, and the motor bearing wear monitoring device includes: a storage (e.g., the RAM 55b, the storage 56, 56A) that stores correspondence information between an amount of wear of the bearings and a voltage value corresponding to the amount of wear; a wear amount detection unit (e.g., the wear amount detection unit 550) that detects the amount of wear of the bearings in the radial direction, based on a first difference between each detection signal output from each of a pair of the radial detection coils among the plurality of radial detection coils, and detects the amount of wear of the bearings in the thrust direction, based on a second difference between a combined signal (e.g., the combined signal C2C4) obtained by combining each detection signal output from each of a pair of the thrust detection coils (e.g., the detection coils C2 and C4) and a combined signal (e.g., the combined signal C6C8) obtained by combining each detection signal output from each of another pair of the thrust detection coils (e.g., the detection coils C6 and C8) among the plurality of thrust detection coils; a signal generation unit (e.g., the signal generation unit 53, 553) that generates an amplitude signal indicating an amplitude of the fundamental component, based on the detection signals to be used for generating the first difference or the combined signals to be used for generating the second difference; and a correction unit (e.g., the correction unit 551, 554) that corrects, depending on the driving frequency, values (e.g., the difference value) of the first difference and the second difference or the correspondence information (e.g., the pieces of correspondence information in the thrust direction and the radial direction), based on the amplitude signal. According to this configuration, the present device is able to correct, depending on the driving condition, the difference value (the voltage value) or the pieces of correspondence information in the thrust direction and the radial direction without any influence from the displacement information. Accordingly, the present device is able to maintain the detection accuracy of the amount of wear without manual operation for the device even though the driving condition is changed.

A second aspect of the present invention is the motor bearing wear monitoring device (e.g., the present device 5) in the first aspect, in which the signal generation unit (e.g., the signal generation unit 53) generates the amplitude signal by adding up each detection signal to be used for generating the first difference. According to this configuration, even though the driving condition is changed, the present device is able to maintain the detection accuracy of the amount of wear without manual operation for the device.

A third aspect of the present invention is the motor bearing wear monitoring device in the second aspect, in which the signal generation unit adds up each detection signal output from all the radial detection coils. According to this configuration, the present device is able to correct, depending on the driving condition, the pieces of correspondence information in the thrust direction and the radial direction without any influence from the displacement information.

A fourth aspect of the present invention is the motor bearing wear monitoring device (e.g., the present device 5A) in the first aspect, in which the signal generation unit (e.g., the signal generation unit 553) generates the amplitude signal by performing weighting on each of the combined signals to be used for generating the second difference in such a way as to cancel information indicating the change in the position of the rotor in the thrust direction and adding up the weighted combined signals. According to this configuration, the present device is able to correct, depending on the driving condition, the difference value (the voltage value) or the pieces of correspondence information in the thrust direction and the radial direction without any influence from the displacement information. Accordingly, the present device is able to maintain the detection accuracy of the amount of wear without manual operation for the device even though the driving condition is changed.

A fifth aspect of the present invention is the motor bearing wear monitoring device in any one of the first to fourth aspects, in which the storage stores reference amplitude information indicating an amplitude of the fundamental component at a predetermined reference frequency of the motor, and the correction unit corrects the values of the first difference and the second difference or the pieces of correspondence information, based on a ratio between an amplitude to be acquired based on the amplitude signal (e.g., a signal level of the amplitude signal: a voltage value) and an amplitude to be acquired based on the reference amplitude information (e.g., a signal level of the reference amplitude signal: a voltage value). According to this configuration, the present device is able to acquire a correction value proportional to the increase and decrease of the driving condition. As a result, the present device is able to correct, depending on the change in the driving condition, the difference value (the voltage value) or the pieces of correspondence information in the thrust direction and the radial direction.

A sixth aspect of the present invention is a correction method for a motor bearing wear monitoring device (e.g., the present device 5, 5A) for monitoring a wear state of bearings (e.g., the bearings 32 and 33) that support a rotating shaft (e.g., the rotating shaft 31) of a rotor (e.g., the rotor 36) by detecting a change in magnetic flux corresponding to a mechanical position change of the rotor with respect to a stator (e.g., the stator 37) of a motor (e.g., the motor unit 3) in a canned motor pump (e.g., the canned motor pump 1) by using a plurality of detection coils (e.g., the detection coils C1 to C8) attached to the stator, in which each of the plurality of detection coils outputs a detection signal indicating the change in the magnetic flux and including a fundamental component based on a driving frequency of the motor, the plurality of detection coils includes a plurality of radial detection coils (e.g., the detection coils C1, C3, C5, and C7) that each detects the change in the magnetic flux in a radial direction of the rotating shaft and a plurality of thrust detection coils (e.g., C2, C4, C6, and C8) that each detects the change in the magnetic flux in a thrust direction of the rotating shaft, and the motor bearing wear monitoring device includes a storage (e.g., the RAM55b) that stores correspondence information between an amount of wear of the bearings and a voltage value corresponding to the amount of wear, and the correction method for the motor bearing wear monitoring device includes: a wear amount detection step (e.g., the wear amount detection processing (S2, S4) ) of detecting the amount of wear of the bearings in the radial direction, based on a first difference between each detection signal output from each of a pair of the radial detection coils among the plurality of radial detection coils, and detecting the amount of wear of the bearings in the thrust direction, based on a second difference between a combined signal (e.g., the combined signal C2C4) obtained by combining each detection signal output from each of a pair of the thrust detection coils (e.g., the detection coils C2 and C4) and a combined signal (e.g., the combined signal C6C8) obtained by combining each detection signal output from each of another pair of the thrust detection coils (e.g., the detection coils C6 and C8) among the plurality of thrust detection coils; a signal generation step (e.g., the correction processing (S1), the correction information acquisition processing (S3)) of generating, with the motor bearing wear monitoring device, an amplitude signal indicating an amplitude of the fundamental component, based on the detection signals to be used for generating the first difference or the combined signals to be used for generating the second difference; and a correction step (e.g., the correction processing (S1), the wear amount detection processing (S4)) of correcting, with the motor bearing wear monitoring device, values of the first difference and the second difference or the correspondence information depending on the driving frequency, based on the amplitude signal. According to this configuration, the present device is able to correct, depending on the driving condition, the difference value (the voltage value) or the pieces of correspondence information in the thrust direction and the radial direction without any influence from the displacement information. Accordingly, the present device is able to maintain the detection accuracy of the amount of wear without manual operation for the device even though the driving condition is changed.

A seventh aspect of the present invention is a correction program to be executed by a processor (e.g., the CPU55a) included in a motor bearing wear monitoring device (e.g., the present device 5A) for monitoring a wear state of bearings (e.g., the bearings 32 and 33) that support a rotating shaft (e.g., the rotating shaft 31) of a rotor (e.g., the rotor 36) by detecting a change in magnetic flux corresponding to a mechanical position change of the rotor with respect to a stator (e.g., the stator 37) of a motor (e.g., the motor unit 3) in a canned motor pump (e.g., the canned motor pump 1) by using a plurality of detection coils (e.g., the detection coils C1 to C8) attached to the stator, in which each of the plurality of detection coils outputs a detection signal indicating the change in the magnetic flux and including a fundamental component based on a driving frequency of the motor, the plurality of detection coils includes a plurality of thrust detection coils (e.g., C2, C4, C6, and C8) that each detects the change in the magnetic flux in a thrust direction of the rotating shaft, the detection signal includes a fundamental component based on a driving frequency of the motor, and the motor bearing wear monitoring device includes a storage (e.g., the RAM 55b, the storage 56A) that stores correspondence information between an amount of wear of the bearings and a voltage value corresponding to the amount of wear, the correction program causing the processor to function as: a wear amount detection unit (e.g., the wear amount detection unit 550) that detects the amount of wear of the bearings in the thrust direction, based on a second difference between a combined signal (e.g., the combined signal C2C4) obtained by combining each detection signal output from each of a pair of the thrust detection coils (e.g., the detection coils C2 and C4) and a combined signal (e.g., the combined signal C6C8) obtained by combining each detection signal output from each of another pair of the thrust detection coils (e.g., the detection coils C6 and C8) among the plurality of thrust detection coils; a signal generation unit (e.g., the signal generation unit 553) that generates an amplitude signal indicating an amplitude of the fundamental component, based on the combined signals to be used for generating the second difference; and a correction unit (e.g., the correction unit 554) that corrects, depending on the driving frequency, a value of the second difference or the correspondence information, based on the amplitude signal. According to this configuration, the present device is able to correct, depending on the driving condition, the difference value (the voltage value) or the pieces of correspondence information in the thrust direction and the radial direction without any influence from the displacement information. Accordingly, the present device is able to maintain the detection accuracy of the amount of wear without manual operation for the device even though the driving condition is changed.

### [Reference Signs List]

1 Canned motor pump
3 Motor unit
31 Rotating shaft
32 Bearing
33 Bearing
36 Rotor
37 Stator
5 Motor bearing wear monitoring device
53 Signal generation unit
55b RAM (Storage)
550 Wear amount detection unit
551 Correction unit
56 Storage
5A Motor bearing wear monitoring device
553 Signal generation unit
554 Correction unit
56A Storage
C1 to C8 Detection coil

## Claims

1. A motor bearing wear monitoring device for monitoring a wear state of bearings that support a rotating shaft of a rotor by detecting a change in magnetic flux corresponding to a mechanical position change of the rotor with respect to a stator of a motor in a canned motor pump by using a plurality of detection coils attached to the stator, wherein
each of the plurality of detection coils outputs a detection signal indicating the change in the magnetic flux and including a fundamental component based on a driving frequency of the motor, and
the plurality of detection coils includes:
a plurality of radial detection coils that each detects the change in the magnetic flux in a radial direction of the rotating shaft; and
a plurality of thrust detection coils that each detects the change in the magnetic flux in a thrust direction of the rotating shaft,
the motor bearing wear monitoring device comprising:
a storage that stores correspondence information between an amount of wear of the bearings and a voltage value corresponding to the amount of wear;
a wear amount detection unit configured to detect the amount of wear of the bearings in the radial direction, based on a first difference between each detection signal output from each of a pair of the radial detection coils among the plurality of radial detection coils, and configured to detect the amount of wear of the bearings in the thrust direction, based on a second difference between a combined signal obtained by combining each detection signal output from each of a pair of the thrust detection coils and a combined signal obtained by combining each detection signal output from each of another pair of the thrust detection coils among the plurality of thrust detection coils;
a signal generation unit configured to generate an amplitude signal indicating an amplitude of the fundamental component, based on the detection signals to be used for generating the first difference or the combined signals to be used for generating the second difference; and
a correction unit configured to correct, depending on the driving frequency, values of the first difference and the second difference or the correspondence information, based on the amplitude signal.

2. The motor bearing wear monitoring device according to Claim 1, wherein
the signal generation unit generates the amplitude signal by adding up each detection signal to be used for generating the first difference.

3. The motor bearing wear monitoring device according to Claim 2, wherein
the signal generation unit adds up each detection signal output from all the radial detection coils.

4. The motor bearing wear monitoring device according to Claim 1, wherein
the signal generation unit generates the amplitude signal by performing weighting on each of the combined signals to be used for generating the second difference in such a way as to cancel the change in the magnetic flux based on wear of the bearing in the thrust direction and adding up the weighted combined signals.

5. The motor bearing wear monitoring device according to any one of Claims 1 to 4, wherein
the storage stores reference amplitude information indicating an amplitude of the fundamental component at a predetermined reference frequency of the motor, and
the correction unit corrects the values of the first difference and the second difference or the correspondence information, based on a ratio between an amplitude to be acquired based on the amplitude signal and an amplitude to be acquired based on the reference amplitude information.

6. A correction method executed by a motor bearing wear monitoring device for monitoring a wear state of bearings that support a rotating shaft of a rotor by detecting a change in magnetic flux corresponding to a mechanical position change of the rotor with respect to a stator of a motor in a canned motor pump by using a plurality of detection coils attached to the stator, wherein
each of the plurality of detection coils outputs a detection signal indicating the change in the magnetic flux and including a fundamental component based on a driving frequency of the motor,
the plurality of detection coils includes
a plurality of radial detection coils that each detects the change in the magnetic flux in a radial direction of the rotating shaft and
a plurality of thrust detection coils that each detects the change in the magnetic flux in a thrust direction of the rotating shaft, and
the motor bearing wear monitoring device includes:
a storage that stores correspondence information between an amount of wear of the bearings and a voltage value corresponding to the amount of wear; and
a wear amount detection unit that detects the amount of wear of the bearings in the radial direction, based on a first difference between each detection signal output from each of a pair of the radial detection coils among the plurality of radial detection coils, and detects the amount of wear of the bearings in the thrust direction, based on a second difference between a combined signal obtained by combining each detection signal output from each of a pair of the thrust detection coils and a combined signal obtained by combining each detection signal output from each of another pair of the thrust detection coils among the plurality of thrust detection coils,
the correction method comprising:
a signal generation step of generating, with the motor bearing wear monitoring device, an amplitude signal indicating an amplitude of the fundamental component, based on the detection signals to be used for generating the first difference or the combined signals to be used for generating the second difference; and
a correction step of correcting, with the motor bearing wear monitoring device, values of the first difference and the second difference or the correspondence information depending on the driving frequency, based on the amplitude signal.

7. A correction program executable on a processor included in a motor bearing wear monitoring device for monitoring a wear state of bearings that support a rotating shaft of a rotor by detecting a change in magnetic flux corresponding to a mechanical position change of the rotor with respect to a stator of a motor in a canned motor pump by using a plurality of detection coils attached to the stator, wherein
each of the plurality of detection coils outputs a detection signal indicating the change in the magnetic flux and including a fundamental component based on a driving frequency of the motor, the plurality of detection coils includes a plurality of thrust detection coils that each detects the change in the magnetic flux in a thrust direction of the rotating shaft, and
the motor bearing wear monitoring device includes:
a storage that stores correspondence information between an amount of wear of the bearings and a voltage value corresponding to the amount of wear; and
a wear amount detection unit that detects the amount of wear of the bearings in the thrust direction, based on a difference between a combined signal obtained by combining each detection signal output from each of a pair of the thrust detection coils and a combined signal obtained by combining each detection signal output from each of another pair of the thrust detection coils among the plurality of thrust detection coils,
the correction program causing the processor to function as:
a signal generation unit configured to generate an amplitude signal indicating an amplitude of the fundamental component, based on the combined signals to be used for generating the difference; and
a correction unit configured to correct, depending on the driving frequency, a value of the difference or the correspondence information, based on the amplitude signal.
